# EUROPEAN PATENT SPECIFICATION

(11) **EP 4 210 362 B1**
(45) Date of publication and mention of the grant of the patent: **05.11.2025**
(21) Application number: 21874178.3
(22) Date of filing: 02.09.2021
(51) Int. Cl.: H04W 4/80, H04W 76/14, H04W 84/18, H04W 92/18

(54) **BLUETOOTH COMMUNICATION SYSTEM, BLUETOOTH CONNECTION METHOD, ELECTRONIC DEVICE, AND STORAGE MEDIUM**
BLUETOOTH-KOMMUNIKATIONSSYSTEM, BLUETOOTH-VERBINDUNGSVERFAHREN, ELEKTRONISCHE VORRICHTUNG UND SPEICHERMEDIUM
SYSTÈME DE COMMUNICATION BLUETOOTH, PROCÉDÉ DE CONNEXION BLUETOOTH, DISPOSITIF ÉLECTRONIQUE ET SUPPORT DE STOCKAGE

(30) Priority: 30.09.2020 CN 202011063166
(43) Date of publication of application: 12.07.2023
(73) Proprietor: Huawei Technologies Co., Ltd., Shenzhen, Guangdong 518129 (CN)
(72) Inventor: NI, Guanjun, Shenzhen, Guangdong 518129 (CN); ZHU, Yuhong, Shenzhen, Guangdong 518129 (CN); ZHANG, Xiaoqiang, Shenzhen, Guangdong 518129 (CN); SU, Jiongjin, Shenzhen, Guangdong 518129 (CN)
(74) Representative: Goddar, Heinz J.
(86) International application number: PCT/CN2021/116264
(87) International publication number: WO 2022/068517

(56) References cited:
- CN-A- 107 889 092
- CN-A- 107 889 092
- CN-A- 108 206 997
- CN-A- 109 618 319
- CN-A- 111 104 186
- US-A1- 2009 233 550
- US-A1- 2009 233 550
- US-A1- 2019 373 430

## Description

### TECHNICAL FIELD

This application relates to the field of communication technologies, and more specifically, to a Bluetooth communication system, a Bluetooth connection method, an electronic device, and a storage medium in the communication field.

### BACKGROUND

Currently, to ensure that a connection can be established between different electronic devices, the two devices usually need to perform parameter negotiation and information exchange according to a protocol standard procedure, and then establish a connection based on negotiated information.

However, a parameter negotiation and information exchange procedure involves a large amount of Bluetooth parameter information exchange, and parameter negotiation and information exchange need to be performed each time when a connection is to be established. This procedure consumes some time in a Bluetooth connection process. This causes a relatively long Bluetooth connection delay of the device. Therefore, how to shorten a Bluetooth connection delay is a technical problem that needs to be resolved.

CN 107889092 A describes a Bluetooth equipment communication control method, wherein a first Bluetooth equipment receives an information query request sent by a second Bluetooth equipment. The first Bluetooth equipment selects a used transmission protocol version according to the information query request, and sends a transmission protocol version model number to the second Bluetooth equipment, for allowing the second Bluetooth equipment to determine a transmission protocol type corresponding to the transmission protocol version model number. The first Bluetooth equipment and the second Bluetooth equipment build a communication connection based on a transmission protocol type.
CN 109618319 A describes a communication connection establishing method, wherein a first equipment receives a first message broadcast by a second equipment on a low-power Bluetooth BLE link. The first message is used to indicate the identification information of the second equipment. The first equipment skips the BLE communication connection according to the identification information of the second equipment, and establishes a communication connection with the second equipment directly on a radio frequency communication RFCOMM link. In the method, the second equipment carries the identification information of the second equipment when broadcasting a data packet to the first equipment, and after receiving the data packet, the first equipment directly skips the BLE connection process according to the identification information, and directly establishes a communication connection with the second equipment on the RFCOMM link.
US 2009/233550 A1 describes a service connection system and a method for a Bluetooth-enabled device for avoiding error caused by Hands-Free Profile (HFP) mismatch in a service level connection initialization procedure. A service connection method for Bluetooth communication includes receiving, at a master device, a first command containing a first set of features supported in a slave device, extracting the first set of features from the first command, matching a second set of features with the first set of features, and transmitting a second command including the second set of features to the slave device.

### SUMMARY

This application provides a Bluetooth communication system, a Bluetooth connection method, an electronic device, and a storage medium, to resolve a problem in a related technology that a Bluetooth connection delay is relatively long due to parameter negotiation and information exchange in a Bluetooth connection process. The invention is defined by the independent claims. Advantageous embodiments of the invention are given by the dependent claims.

According to a first aspect, this application provides a Bluetooth connection method. The method is applied to a Bluetooth communication system. The Bluetooth communication system includes a first electronic device and a second electronic device. The method includes: The first electronic device sends first version information of the first electronic device to the second electronic device, where the first version information is used for indicating a version of the first electronic device; the first electronic device receives confirmation information sent by the second electronic device, where the confirmation information is used for indicating that a version of the second electronic device is the same as the version of the first electronic device; and the first electronic device establishes a Bluetooth connection to the second electronic device based on a first Bluetooth connection parameter, where the first Bluetooth connection parameter is a Bluetooth connection parameter corresponding to the version of the first electronic device.

Because the version of the second electronic device is the same as the version of the first electronic device, a Bluetooth connection parameter of the second electronic device is the same as the Bluetooth connection parameter of the first electronic device. In this way, when learning that the versions of the two devices are the same, the first electronic device may directly and locally invoke the Bluetooth connection parameter shared by the two devices, to establish the Bluetooth connection.

According to the foregoing solution, when the two electronic devices need to establish the Bluetooth connection, whether the versions of the two electronic devices are consistent may be first determined, and whether a Bluetooth connection parameter needs to be exchanged is further determined. If the versions are consistent, Bluetooth connection parameters of the two devices are consistent, a Bluetooth connection parameter may not need to be exchanged, and a Bluetooth connection parameter of a peer device may be directly obtained from a local device to establish the Bluetooth connection. In this way, an information exchange procedure in a Bluetooth connection process can be simplified, and a Bluetooth connection speed can be increased.

In a possible embodiment, before the two devices establish the Bluetooth connection, a paging establishment procedure needs to be first completed between the two devices.

Further according to the first aspect, the method further includes:
When the version of the second electronic device is different from the version of the first electronic device, the first electronic device receives first parameter change indication information sent by the second electronic device, where the first parameter change indication information is used for indicating change content of the Bluetooth connection parameter of the second electronic device; and
the first electronic device determines, based on the first parameter change indication information, information used for establishing the Bluetooth connection to the second electronic device.

According to the foregoing solution, when the versions of the two devices are different, if the two devices have been paired and connected and each have stored information about a peer device previously, the two devices may first determine whether the information about the peer device is changed in comparison with information used for the previous connection. If the information about the peer device is changed, changed information is exchanged to establish the connection. If the information about the peer device is not changed, no information needs to be exchanged, and the stored information about the peer device is directly invoked to establish the connection.

Further according to the first aspect, that the first electronic device determines, based on the first parameter change indication information, information used for establishing the Bluetooth connection to the second electronic device includes:
If the first parameter change indication information indicates that there is change content, the first electronic device determines a second Bluetooth connection parameter of the second electronic device based on the stored Bluetooth connection parameter of the second electronic device and the change content indicated by the first parameter change indication information; and
the first electronic device establishes the Bluetooth connection to the second electronic device based on the first Bluetooth connection parameter and the second Bluetooth connection parameter.

That the first electronic device determines a second Bluetooth connection parameter of the second electronic device based on the stored Bluetooth connection parameter of the second electronic device and the change content indicated by the first parameter change indication information includes:
The first electronic device updates the stored Bluetooth connection parameter of the second electronic device by using the change content indicated by the first parameter change indication information, to obtain the latest second Bluetooth connection parameter of the second electronic device.

In another possible embodiment, that the first electronic device determines, based on the first parameter change indication information, information used for establishing the Bluetooth connection to the second electronic device includes:
If the first parameter change indication information indicates that there is no change content, the first electronic device locally obtains the stored Bluetooth connection parameter of the second electronic device from the first electronic device; and
the first electronic device establishes the Bluetooth connection to the second electronic device based on the first Bluetooth connection parameter and the stored Bluetooth connection parameter of the second electronic device.

When the versions of the two devices are different, if the first parameter change indication information indicates that the first Bluetooth connection parameter has no change content, the two devices do not need to exchange information, and the stored information about the peer device is directly invoked to establish the connection. In this way, the information exchange procedure in the Bluetooth connection process can be simplified, and the Bluetooth connection speed can be increased.

In a possible implementation of the first aspect, the second electronic device is further configured to: the first parameter change indication information is information obtained by flagging a mask.

According to the foregoing solution, the two devices each may identify changed information or node of the local device, and then the two devices exchange an information identifier. In this way, when establishing a connection, the two devices may identify, based on the information identifier, which information is changed, and re-negotiate and re-exchange the changed information without a need to exchange and negotiate information that is not changed. This can omit some exchange procedures during connection. Therefore, in this application, a connection establishment procedure can be simplified, the Bluetooth connection speed can be increased, and a waste of air interface interaction resources can be avoided.

In a possible implementation of the first aspect, the method further includes:
When the version of the second electronic device is different from the version of the first electronic device, the first electronic device sends a second request message to the second electronic device, where the second request message includes the first Bluetooth connection parameter of the first electronic device;
the first electronic device receives a second response message sent by the second electronic device, where the second response message includes the second Bluetooth connection parameter of the second electronic device; and
the first electronic device establishes the Bluetooth connection to the second electronic device based on the first Bluetooth connection parameter and the second Bluetooth connection parameter.

In the foregoing solution, if Bluetooth communication protocol versions supported by the two devices are the same, the two devices may not need to exchange a Bluetooth connection parameter, and each may directly obtain a Bluetooth connection parameter of the peer device from the local device to establish the Bluetooth connection, without a need to perform a parameter negotiation and information exchange procedure again. If the Bluetooth communication protocol versions supported by the two devices are different, the two devices may establish the connection after exchanging information according to a conventional protocol standard procedure. In this way, the solutions of this application can simplify the information exchange procedure in the Bluetooth connection process, and increase the Bluetooth connection speed.

In a possible implementation of the first aspect, that the first electronic device sends first version information of the first electronic device to the second electronic device includes: The first electronic device sends a first request message to the second electronic device, where the first request message includes the first version information.

That the first electronic device receives confirmation information sent by the second electronic device includes: The first electronic device receives a first response message sent by the second electronic device for the first request message, where the first response message includes the confirmation information.

In a possible implementation of the first aspect, the first Bluetooth connection parameter is a static parameter; and the method further includes:
The first electronic device sends a dynamically changed third Bluetooth connection parameter of the first electronic device to the second electronic device; the first electronic device receives a dynamically changed fourth Bluetooth connection parameter of the second electronic device that is sent by the second electronic device; and the first electronic device establishes the Bluetooth connection to the second electronic device based on the first Bluetooth connection parameter, the third Bluetooth connection parameter, and the fourth Bluetooth connection parameter.

According to the first aspect, processes in which the two devices establish the Bluetooth connection in different manners when the versions are the same and when the versions are different are described. This is implemented without considering a dynamic factor in a connection establishment process. In actual implementation, when the versions of the two devices are the same, the two devices may further need to negotiate some dynamically changed parameters during connection, for example, a connection establishment request, a clock, and a frequency hopping parameter. The two devices may exchange such dynamically changed information and operations according to a normal procedure.

According to a second aspect that is not according to the claims, this application provides another Bluetooth connection method. The method includes:
A first electronic device receives first parameter change indication information sent by a second electronic device, where the first parameter change indication information is used for indicating change content of a first Bluetooth connection parameter of the second electronic device;
if the first parameter change indication information indicates that there is change content, the first electronic device determines a second Bluetooth connection parameter of the second electronic device based on the stored first Bluetooth connection parameter and the change content indicated by the first parameter change indication information; and
the first electronic device establishes a Bluetooth connection to the second electronic device based on the second Bluetooth connection parameter of the second electronic device and a third Bluetooth connection parameter of the first electronic device.

According to the foregoing solution, when the two electronic devices need to establish the Bluetooth connection, whether a Bluetooth connection parameter of a peer device is changed may be first determined, and whether a Bluetooth connection parameter needs to be exchanged or which Bluetooth connection parameter needs to be exchanged is further determined. If the Bluetooth connection parameter of the peer device is changed, only changed information may be exchanged to establish the Bluetooth connection. In this way, an information exchange procedure in a Bluetooth connection process can be simplified, and a Bluetooth connection speed can be increased.

The third Bluetooth connection parameter is a Bluetooth connection parameter that is locally stored on the first electronic device and that corresponds to the first electronic device, and may be directly and locally invoked from the first electronic device.

Optionally, if the Bluetooth connection parameter of the second electronic device is changed, the first electronic device may obtain a changed Bluetooth connection parameter of the second electronic device, and update, by using the Bluetooth connection parameter, the Bluetooth connection parameter of the second electronic device that has been stored on the first electronic device.

In a possible implementation of the second aspect, before the first electronic device receives the first parameter change indication information sent by the second electronic device, the method further includes:
The first electronic device sends a first request message to the second electronic device, where the first request message is used for requesting to establish the Bluetooth connection to the second electronic device.

That a first electronic device receives first parameter change indication information sent by a second electronic device includes:
The first electronic device receives the first response message sent by the second electronic device for the first request message, where the first response message includes the first parameter change indication information.

It should be noted that, the foregoing is described by using an example in which the local device obtains changed information of the peer device. In actual implementation, when information of the local device is changed, the local device may also send changed information of the local device to the peer device, to indicate the peer device to refresh information stored on the peer device. In this way, the two devices may exchange an information change part during connection establishment. This can simplify a connection establishment procedure, increase the Bluetooth connection speed, and avoid a waste of air interface interaction resources.

In a possible implementation of the second aspect, the method further includes: When the first parameter change indication information indicates that there is no change content, the first electronic device establishes the Bluetooth connection to the second electronic device based on the stored first Bluetooth connection parameter and the third Bluetooth connection parameter.

According to the foregoing solution, when the two electronic devices need to establish the Bluetooth connection, whether the Bluetooth connection parameter of the peer device is changed may be first determined, and whether the Bluetooth connection parameter needs to be exchanged or which Bluetooth connection parameter needs to be exchanged is further determined. If the Bluetooth connection parameter of the peer device is not changed, a Bluetooth connection parameter may not need to be exchanged, and the Bluetooth connection parameter of the peer device that has been stored is directly obtained from the local device to establish the Bluetooth connection. If the Bluetooth connection parameter of the peer device is changed, only changed information may be exchanged to establish the Bluetooth connection. In this way, the information exchange procedure in the Bluetooth connection process can be simplified, and the Bluetooth connection speed can be increased.

In a possible implementation of the second aspect, the first parameter change indication information is information obtained by flagging a mask. In this case, the two devices each may identify changed information or node of the local device, and then the two devices exchange an information identifier. In this way, when establishing a connection, the two devices may identify, based on the information identifier, which information is changed, and re-negotiate and re-exchange the changed information without a need to exchange and negotiate information that is not changed. This can omit some exchange procedures during connection. Therefore, in this application, a connection establishment procedure can be simplified, the Bluetooth connection speed can be increased, and a waste of air interface interaction resources can be avoided.

It should be noted that for a connection between non-peer-to-peer devices (for example, earphones are connected to a mobile phone) except a connection between peer-to-peer devices such as TWS earphones, some exchange procedures during connection can be omitted by using the method provided in the second aspect. For example, for a Bluetooth connection combination of earphones and a mobile phone, because information about a peer end cannot be obtained before pairing, the information cannot be locally obtained in a TWS binaural mode. When pairing is established for the first time, static configuration and capability information of the peer end is obtained after pairing is established and negotiation and exchange are performed according to a standard procedure. The local device records the information about the peer device. When a connection is to be established next time, if the information about the peer device is not changed, re-negotiation and re-exchange can be omitted; or if a part of the information about the peer device is changed, only changed information is exchanged, so that all parameters used for the Bluetooth connection are obtained, to establish the Bluetooth connection. In this way, the connection establishment procedure can be simplified, the Bluetooth connection speed can be increased, and the waste of air interface interaction resources can be avoided.

According to a third aspect, this application provides an electronic device. The electronic device includes units configured to perform the method in the first aspect. The electronic device may correspondingly perform the method described in the first aspect. For a related description of the units in the electronic device, refer to the description in the first aspect. For brevity, details are not described herein again.

According to a fourth aspect that is not according to the claims, this application provides an electronic device. The electronic device includes units configured to perform the method in the second aspect. The electronic device may correspondingly perform the method described in the second aspect. For a related description of the units in the electronic device, refer to the description in the second aspect. For brevity, details are not described herein again.

According to a fifth aspect, this application provides a Bluetooth communication system. The Bluetooth communication system includes a first electronic device and a second electronic device.

The first electronic device is configured to send first version information of the first electronic device to the second electronic device, where the first version information is used for indicating a version of the first electronic device.

The second electronic device is configured to: receive the first version information sent by the first electronic device, and send the confirmation information to the first electronic device based on the first version information, where the confirmation information is used for indicating that a version of the second electronic device is the same as the version of the first electronic device.

The first electronic device is further configured to: receive the confirmation information sent by the second electronic device, and establish a Bluetooth connection to the second electronic device based on a first Bluetooth connection parameter.

The first Bluetooth connection parameter is a Bluetooth connection parameter corresponding to the version of the first electronic device.

The Bluetooth communication system correspondingly performs the method described in the first aspect. For a related description of the first electronic device and the second electronic device, refer to the description in the first aspect. For brevity, details are not described herein again.

According to a sixth aspect that is not according to the claims, this application further provides a Bluetooth communication system. The Bluetooth communication system includes a first electronic device and a second electronic device.

The second electronic device is configured to send first parameter change indication information to the first electronic device, where the first parameter change indication information is used for indicating change content of a first Bluetooth connection parameter of the second electronic device.

The first electronic device is configured to: receive the first parameter change indication information sent by the second electronic device, and determine a second Bluetooth connection parameter of the second electronic device based on the stored first Bluetooth connection parameter and the change content indicated by the first parameter change indication information.

The first electronic device is further configured to establish a Bluetooth connection to the second electronic device based on the second Bluetooth connection parameter of the second electronic device and a third Bluetooth connection parameter of the first electronic device.

The Bluetooth communication system correspondingly performs the method described in the second aspect. For a related description of the first electronic device and the second electronic device, refer to the description in the second aspect. For brevity, details are not described herein again.

According to a seventh aspect, this application provides an electronic device. The electronic device includes a processor. The processor is coupled to a memory. The memory is configured to store a computer program or instructions. The processor is configured to execute the computer program or the instructions stored in the memory, so that the method in any one of the first aspect and the possible implementations of the first aspect is implemented.

According to an eighth aspect that is not according to the claims, this application provides an electronic device. The electronic device includes a processor. The processor is coupled to a memory. The memory is configured to store a computer program or instructions. The processor is configured to execute the computer program or the instructions stored in the memory, so that the method in any one of the second aspect and the possible implementations of the second aspect is implemented.

According to a ninth aspect, this application provides a computer-readable storage medium. The computer-readable storage medium stores a computer program (which may also be referred to as instructions or code) used for implementing the method in the first aspect and/or the method in the second aspect.

For example, when the computer program is executed by a computer, the computer is enabled to perform the method in any one of the first aspect and the possible implementations of the first aspect and/or the method in any one of the second aspect and the possible implementations of the second aspect.

According to a tenth aspect, this application provides a chip (for example, a Bluetooth chip), including a processor. The processor is configured to read and execute a computer program stored in a memory, to perform the method in any one of the first aspect and the possible implementations of the first aspect and/or the method in any one of the second aspect and the possible implementations of the second aspect.

Optionally, the chip further includes the memory, and the memory is connected to the processor through a circuit or a wire.

According to an eleventh aspect, this application provides a chip system, including a processor. The processor is configured to read and execute a computer program stored in a memory, to perform the method in any one of the first aspect and the possible implementations of the first aspect and/or the method in any one of the second aspect and the possible implementations of the second aspect.

When the electronic device is the chip system, the electronic device may include a chip (for example, a Bluetooth chip), or may include a chip and another discrete device.

According to a twelfth aspect, this application provides a computer program product. The computer program product includes a computer program (which may also be referred to as instructions or code). When the computer program is executed by a computer, the computer is enabled to implement the method in any one of the first aspect and the possible implementations of the first aspect and/or the method in any one of the second aspect and the possible implementations of the second aspect.

It may be understood that the electronic device, the Bluetooth communication system, the computer-readable storage medium, the computer program product, or the method provided above is applicable in the Bluetooth connection method provided above. Therefore, for beneficial effects that can be achieved by the electronic device, the Bluetooth communication system, the computer-readable storage medium, the computer program product, or the method, refer to beneficial effects of the corresponding Bluetooth connection method.

These or other aspects of this application are more concise and easier to understand in the description of the following embodiments.

### BRIEF DESCRIPTION OF DRAWINGS

FIG. 1 is a schematic diagram of a system architecture according to an embodiment of this application;
FIG. 2 is a schematic diagram of a Bluetooth protocol architecture according to an embodiment of this application;
FIG. 3 is a schematic flowchart 1 of a Bluetooth connection method according to an embodiment of this application;
FIG. 4 is a schematic flowchart 2 of a Bluetooth connection method according to an embodiment of this application;
FIG. 5 is a schematic flowchart 3 of a Bluetooth connection method according to an embodiment of this application;
FIG. 6(a) to FIG. 6(d) are a schematic diagram of device pairing in a Bluetooth connection method according to an embodiment of this application;
FIG. 7 is a schematic flowchart 4 of a Bluetooth connection method according to an embodiment of this application;
FIG. 8 is a schematic block diagram 1 of a structure of an electronic device according to an embodiment of this application;
FIG. 9 is a schematic block diagram 2 of a structure of an electronic device according to an embodiment of this application; and
FIG. 10 is a schematic diagram of hardware of an electronic device according to an embodiment of this application.

### DESCRIPTION OF EMBODIMENTS

The following describes the technical solutions in embodiments of this application with reference to the accompanying drawings in embodiments of this application.

In the description of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description of this application, unless otherwise specified, "a plurality of" means two or more than two. In addition, to clearly describe the technical solutions in embodiments of this application, the terms "first", "second", and the like in embodiments of this application are intended to distinguish between different objects, or are intended to distinguish between different processing of a same object, but are not intended to describe a particular order of the objects.

Reference to "an embodiment", "some embodiments", or the like described in this specification of this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "comprise", "have", and their variants all mean "include but are not limited to", unless otherwise specifically emphasized in another manner.

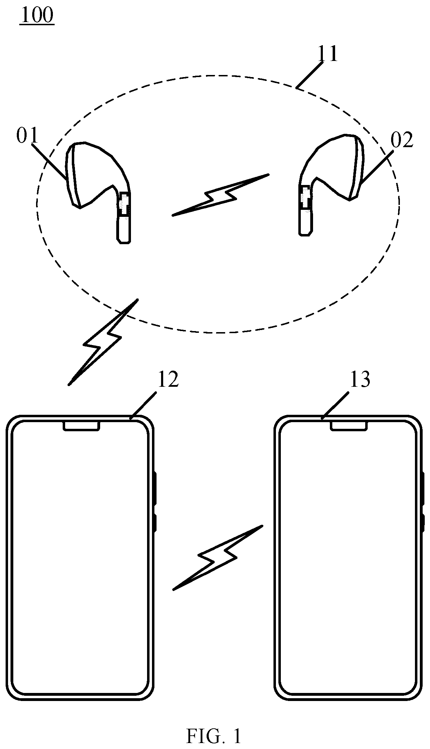

FIG. 1 is a schematic diagram of an architecture of a communication system according to example embodiments of this application. As shown in FIG. 1, the communication system 100 may include a plurality of electronic devices supporting a wireless communication technology. For example, the communication system 100 may include Bluetooth earphones 11 and a mobile phone 12. The Bluetooth earphones 11 include a first earphone 01 and a second earphone 02. The Bluetooth earphones 11 and the mobile phone 12 may establish and maintain a wireless connection by using a wireless communication technology. In addition, the first earphone 01 and the second earphone 02 may also be used as independent electronic devices supporting a wireless communication technology, and may establish and maintain a wireless connection by using the wireless communication technology. For another example, the communication system 100 may further include a mobile phone 13. The mobile phone 12 and the mobile phone 13 may establish and maintain a wireless connection by using a wireless communication technology.

Optionally, the wireless communication technology may be Bluetooth (Bluetooth, BT), for example, conventional Bluetooth or Bluetooth low energy (Bluetooth low energy, BLE), or a universal 2.4G/5G frequency band wireless communication technology.

Optionally, the communication system 100 may include the Bluetooth earphones, the mobile phone, and the like shown in FIG. 1, and certainly may further include an electronic device supporting a wireless communication technology, such as a tablet computer, a wireless speaker, a wireless band, a wireless vehicle-mounted device, wireless smart glasses, a wireless watch, an augmented reality (augmented reality, AR)/virtual reality (virtual reality, VR) device, a media player (for example, MP3 or MP4), a notebook computer, an ultra-mobile personal computer (ultra-mobile personal computer, UMPC), a personal digital assistant (personal digital assistant, PDA), a television, or a smartwatch. A type of the electronic device in the communication system 100 is not specifically limited in embodiments of this application. These electronic devices may establish and maintain a wireless connection (for example, a Bluetooth connection) by using a wireless communication technology. It should be noted that an electronic device that can support a Bluetooth function is also referred to as a Bluetooth device.

An example in which the electronic device is Bluetooth earphones is used for description. There may be a plurality of types of Bluetooth earphones, for example, earplug-type Bluetooth earphones, in-ear-type Bluetooth earphones, a Bluetooth headset, earmuff-type Bluetooth earphones, or ear-hook-type Bluetooth earphones. The Bluetooth earphones may include a first part and a second part that are respectively worn on the left ear and the right ear of a user, where the first part and the second part may be connected through a connection cable, for example, neckband-type Bluetooth earphones; or the first part and the second part may be two independent parts, for example, true wireless stereo (true wireless stereo, TWS) earphones.

In this application, the Bluetooth earphones are earphones supporting a Bluetooth communication protocol. The Bluetooth communication protocol may be a conventional Bluetooth protocol, or may be a BLE Bluetooth low energy protocol, or certainly, may be another new Bluetooth protocol type launched in the future. From a perspective of a version of a Bluetooth protocol, a version of the Bluetooth communication protocol may be any one of the following versions: 1.0 series version, 2.0 series version, 3.0 series version, 4.0 series version, and another series version released in the future.

For example, the Bluetooth earphones are TWS earphones. As shown in FIG. 1, the TWS earphones 11 include the first earphone 01 and the second earphone 02. A Bluetooth module is disposed in each of the first earphone 01 and the second earphone 02, and the first earphone 01 and the second earphone 02 may transmit data by using a Bluetooth protocol. Bluetooth communication protocol versions of the two earphones may be the same or may be different. It can be seen from an appearance of the TWS earphones 11 that there is no connection cable between the first earphone 01 and the second earphone 02, and therefore, the TWS earphones 11 have advantages of being convenient to carry and being easy to use. Optionally, the first earphone 01 and the second earphone 02 each may include a microphone. That is, in addition to an audio playing function, the first earphone 01 and the second earphone 02 further have an audio collection function.

In actual implementation, the user may use the TWS earphones 11 in a binaural mode or a uniaural mode. In the uniaural mode, the user wears the first earphone 01 or the second earphone 02, to perform an audio service such as listening to music or answering/making a call. In the binaural mode, the user may respectively wear the two earphones on the left ear and the right ear, to perform an audio service such as listening to music or answering/making a call. In the binaural mode, the two earphones are distinguished as a primary earphone and a secondary earphone. In addition, in a process of using the TWS earphones, primary and secondary roles of the two earphones may be switched based on different conditions. For example, an earphone with a higher battery level may be switched to the primary earphone, and an earphone with a lower battery level may be switched to the secondary earphone. For another example, it is assumed that the user wears the first earphone 01 and the second earphone 02, and the first earphone 01 is the primary earphone and the second earphone 02 is the secondary earphone. If the user removes the first earphone 01, the second earphone 02 may be switched from the secondary earphone to the primary earphone, and the first earphone 01 is switched from the primary earphone to the secondary earphone, or stops working after preset duration or directly stops working.

In one aspect, in the uniaural mode, if the user wears the first earphone 01 but does not wear the second earphone 02, and the first earphone 01 is the primary earphone, the primary earphone and the mobile phone may perform pairing and establish a wireless connection through information exchange and parameter negotiation, to implement wireless communication and service processing between the primary earphone and the mobile phone through the wireless connection. For example, as shown in FIG. 1, the mobile phone 12 and the first earphone 01 may establish a wireless connection through information exchange and parameter negotiation. If the mobile phone 12 initiates an audio service, the mobile phone 12 may send an audio signal to the first earphone 01, and the first earphone 01 plays the audio signal after receiving the audio signal.

In another aspect, in the binaural mode, if the user wears the first earphone 01 and the second earphone 02, and the first earphone 01 and the second earphone 02 are respectively the primary earphone and the secondary earphone, the primary earphone and the secondary earphone may perform pairing and establish a wireless connection through information exchange and parameter negotiation, to implement wireless communication and service processing between the primary earphone and the secondary earphone through the wireless connection.

In still another aspect, in the binaural mode, if the user wears the first earphone 01 and the second earphone 02, the primary earphone and the secondary earphone may perform pairing and establish a wireless connection through information exchange and parameter negotiation, and the primary earphone and the mobile phone may also perform pairing and establish a wireless connection by using a wireless communication technology. In this way, wireless connections, wireless communication, and service processing between the mobile phone and the primary earphone and between the primary earphone and the secondary earphone are implemented. For example, as shown in FIG. 1, the mobile phone 12 and the first earphone 01 may establish a wireless connection through information exchange and parameter negotiation. Likewise, the first earphone 01 and the second earphone 02 may establish a wireless connection through information exchange and parameter negotiation. For example, if the mobile phone 12 initiates an audio service, the mobile phone 12 may send an audio signal to the first earphone 01. After receiving the audio signal, the first earphone 01 sends the audio signal to the second earphone 02, so that the first earphone 01 and the second earphone 02 separately play the audio signal.

In some embodiments, the Bluetooth earphones may support one or more of the following applications: an HSP (headset profile) application, an HFP (hands-free profile) application, and an A2DP (advanced audio distribution profile) application. The HSP application is an earphone application, and provides a basic function required for communication between the mobile phone and the earphones. The Bluetooth earphones may be used as an audio input and output interface of the mobile phone. The HFP application is a hands-free application. The HFP application is added with some extended functions based on the HSP application. The Bluetooth earphones can control a call process of the mobile phone, for example, answering, ending, rejecting, and voice dialing. The A2DP application is an advanced audio distribution application, and supports transmission of a stereo audio stream.

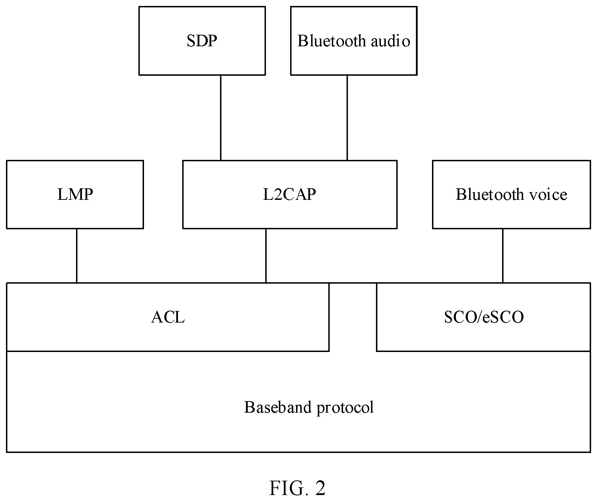

In the communication system 100 shown in FIG. 1, devices need to comply with a Bluetooth protocol, to implement a Bluetooth connection and information exchange. Similar to the open systems interconnection reference model (open systems interconnection reference model, OSI), a protocol system of a Bluetooth technology also uses a hierarchical structure, and a Bluetooth protocol stack is formed from a bottom layer to a top layer. A protocol at each layer defines a function to be implemented and a used data packet format, to ensure interoperability between Bluetooth products. Core protocols of Bluetooth include a baseband protocol, a link management protocol LMP, a logical link control and adaptation protocol L2CAP, a service discovery protocol SDP, and the like. For ease of understanding embodiments of this application, FIG. 2 is a schematic diagram of a Bluetooth protocol architecture. With reference to FIG. 2, the following describes Bluetooth protocols in embodiments of this application, to facilitate understanding of a person skilled in the art.
(1) Baseband (baseband) protocol: The baseband protocol is a protocol between a baseband and a link control layer, and is used for ensuring a physical connection formed by radio frequencies between Bluetooth devices in a pico network. A Bluetooth radio frequency system is a frequency modulation system, and any packet is sent in a specified slot at a specified frequency. Inquiry and paging processes are used for synchronizing transmit frequencies and clocks between different devices, two physical connection modes are provided for baseband data packets, that is, connection-oriented (synchronous connection-oriented link, SCO) and connectionless (asynchronous connectionless, ACL), and transmission of a plurality of pieces of data can be implemented at a same radio frequency. The SCO and an extended SCO (extended SCO, eSCO) can be used for transmitting communication data that has a high time requirement. The ACL is applicable to a data packet, and the SCO is applicable to voice and a combination of voice and data. A special channel is allocated for each of different types of data (including connection management information and control information). Voice can be transmitted between Bluetooth devices in various user modes. A connection-oriented voice packet is transmitted through only a baseband, but does not arrive at an L2CAP. A voice mode is relatively simple in a Bluetooth system, and only a Bluetooth voice connection needs to be enabled to transmit voice.
(2) Link management protocol (link management protocol, LMP): The link management protocol is responsible for establishing and setting a connection between Bluetooth devices. The LMP is used for performing identity authentication and encryption through connection initiation, exchange, and verification, determining a size of a baseband data packet through negotiation, and further controlling an energy-saving mode and a working period of a wireless device and a connection status of device units in the pico network.
(3) Logical link control and adaptation protocol (logical link control and adaptation protocol, L2CAP): The L2CAP is an upper-layer protocol of the baseband protocol. It may be considered that the L2CAP works in parallel with the LMP. A difference between the L2CAP and the LMP lies in that the L2CAP provides a service for an upper layer when service data does not pass through the LMP. The L2CAP provides a logical channel, referred to as an L2CAP channel. The L2CAP provides connection-oriented and connectionless data services for the upper-layer protocol. Multiplexing, segmentation and reassembly, and group extraction technologies are used. The L2CAP allows the upper-layer protocol to receive and send a data packet in a length of 64 KB. Although the baseband protocol provides two connection types: the SCO and the ACL, the L2CAP supports only the ACL.
(4) Service discovery protocol (service discovery protocol, SDP): A discovery service plays an important role in a Bluetooth technology framework, and the service discovery protocol is the basis of all user modes. Device information and a service type can be obtained through an inquiry by using the SDP, to establish a corresponding connection between Bluetooth devices.

Currently, a connection process between different electronic devices needs to be implemented according to a protocol standard procedure, and the standard procedure includes an information exchange procedure of two connection parties. Specifically, in the connection process, according to the protocol standard procedure, some parameter negotiation and information exchange need to be performed between the electronic devices, for example, exchange of feature support and version specifications of the LMP, key parameter negotiation, and an SDP service inquiry. Especially, the L2CAP channel needs to be first established, and then the SDP service inquiry is performed. This process is time-consuming. Therefore, the foregoing information exchange procedure during connection consumes some time in a Bluetooth connection process. This causes a relatively long Bluetooth connection delay. How to reduce the Bluetooth connection delay to improve user experience is a technical problem that needs to be resolved.

In view of the foregoing case, this application provides a Bluetooth connection method based on the foregoing system architecture, to simplify an information exchange procedure between devices during connection. The Bluetooth connection method is applied to the Bluetooth communication system. The Bluetooth communication system includes a first electronic device and a second electronic device. In this application, a Bluetooth connection is established between the first electronic device and the second electronic device by using the Bluetooth connection method.

Information of a peer device that needs to be obtained and negotiated in a Bluetooth connection process is fixed or modifiable (semi-statically changed) in a device life cycle. Therefore, the information may be considered as known information when the information is not changed, and does not need to be negotiated and obtained repeatedly during each connection. Especially, two earphones of TWS earphones have same software and hardware. Therefore, most static information or semi-static information of the two earphones is consistent. Based on this, this application provides the following two possible implementations to simplify an information exchange procedure in a Bluetooth connection process.

In a first implementation, an embodiment of this application provides a Bluetooth connection method. When two electronic devices need to establish a Bluetooth connection, whether versions of the two electronic devices are consistent may be first determined, and whether a Bluetooth connection parameter needs to be exchanged is further determined. If the versions are consistent, Bluetooth connection parameters of the two devices are consistent, a Bluetooth connection parameter may not need to be exchanged, and a Bluetooth connection parameter of a peer device may be directly obtained from a local device to establish the Bluetooth connection. In this way, an information exchange procedure in a Bluetooth connection process can be simplified, and a Bluetooth connection speed can be increased.

In a second implementation, an embodiment of this application provides another Bluetooth connection method. When two electronic devices need to establish a Bluetooth connection, whether a Bluetooth connection parameter of a peer device is changed may be first determined, and whether a Bluetooth connection parameter needs to be exchanged or which Bluetooth connection parameter needs to be exchanged is further determined. If the Bluetooth connection parameter of the peer device is not changed, a Bluetooth connection parameter may not need to be exchanged, and the Bluetooth connection parameter of the peer device that has been stored is directly obtained from a local device to establish the Bluetooth connection. If the Bluetooth connection parameter of the peer device is changed, only changed information may be exchanged to establish the Bluetooth connection. In this way, an information exchange procedure in a Bluetooth connection process can be simplified, and a Bluetooth connection speed can be increased.

With reference to the accompanying drawings, the following separately describes the Bluetooth connection method provided in the first implementation of this application and the Bluetooth connection method provided in the first implementation of this application.

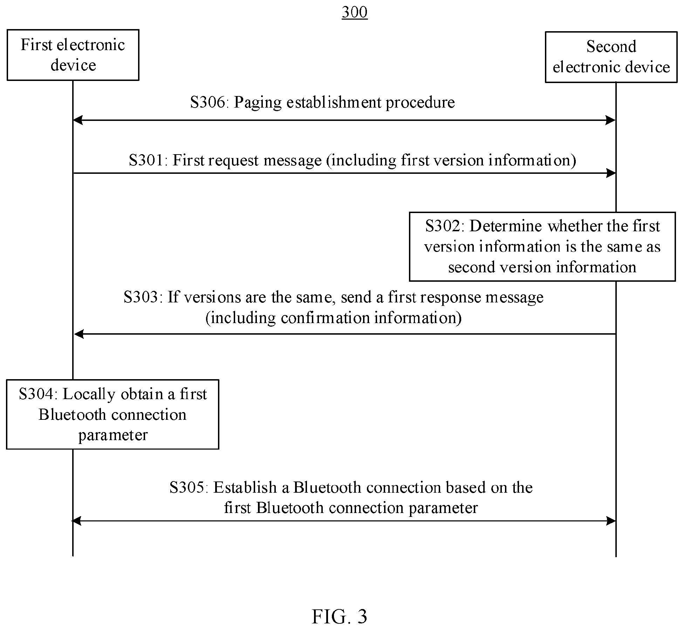

FIG. 3 is a flowchart of the Bluetooth connection method according to the first implementation of this application. As shown in FIG. 3, the method 300 includes the following steps S301 to S305.

S301: A first electronic device sends first version information to a second electronic device, and the second electronic device receives the first version information sent by the first electronic device.

In the first implementation, the first version information may be used for indicating a version of the first electronic device. The version of the electronic device mentioned herein may be a version of a Bluetooth communication protocol supported or recently updated by the electronic device, for example, 1.0 series version, 2.0 series version, 3.0 series version, 4.0 series version, or another series version released in the future. For example, the first version information of the first electronic device indicates that a Bluetooth communication protocol supported by the first electronic device is 4.0 series version. Certainly, the version of the electronic device may alternatively be a system version or a software version of the electronic device. This may be specifically determined based on an actual use requirement, and is not limited in embodiments of this application.

Optionally, in the first implementation, when the first electronic device finds the second electronic device through scanning or discovers the second electronic device, the first electronic device may send the first version information to the second electronic device, to initiate a Bluetooth connection. The foregoing scanning or discovery process may be implemented by using a Bluetooth communication technology. The scanning or discovery process is a process of establishing paging between the first electronic device and the second electronic device. Alternatively, the scanning or discovery process may be implemented by using another wireless communication technology (for example, a near field communication technology). This may be specifically determined based on an actual use requirement, and is not limited in embodiments of this application. For ease of description, an example in which the two devices establish a Bluetooth connection after completing paging is used in the following for description.

Optionally, the first electronic device not only sends the first version information to the second electronic device, but also indicates the second electronic device to determine whether a Bluetooth communication protocol version of the first electronic device is consistent with a Bluetooth communication protocol version of the second electronic device.

It should be noted that, generally, an electronic device that initiates a connection may be referred to as a primary device, and a device that accepts the connection may be referred to as a secondary device. Herein, the first electronic device sends the first version information to the second electronic device, which is equivalent to initiating a connection. In this case, the first electronic device is the primary device; and the second electronic device receives the first version information, and may be used as the secondary device.

S302: The second electronic device determines whether the first version information is the same as second version information.

The second version information is used for indicating a version of the second electronic device. For a description of the second version information, refer to the foregoing detailed description of the first version information. Details are not described herein again.

In actual implementation, TWS earphones are used as an example. Bluetooth communication protocol versions of a first earphone and a second earphone may be the same. For example, Bluetooth communication protocols supported by the two earphones are both 4.0 series version. Alternatively, Bluetooth communication protocol versions of the first earphone and the second earphone may be different. For example, a Bluetooth communication protocol supported by the first earphone is 3.0 series version, and a Bluetooth communication protocol supported by the second earphone is 4.0 series version.

In this embodiment of this application, the second electronic device may determine, based on the first version information and the second version information, whether the version of the second electronic device is the same as the version of the first electronic device, and then a subsequent execution step is determined based on a determining result. On one hand, if the second electronic device determines that the first version information is the same as the second version information, that is, the Bluetooth communication protocol versions supported by the two Bluetooth devices are the same, the following steps S303 to S305 are continued to be performed. On the other hand, if the second electronic device determines that the first version information is different from the second version information, that is, the Bluetooth communication protocol versions supported by the two Bluetooth devices are different, the following step S307 or S311 is continued to be performed.

S303: If the versions are the same, the second electronic device sends confirmation information to the first electronic device, and the first electronic device receives the confirmation information sent by the second electronic device.

The confirmation information is used for indicating that the version of the second electronic device is the same as the version of the first electronic device. If the version of the first electronic device is the same as the version of the second electronic device, and Bluetooth connection parameters corresponding to the same version are the same, a Bluetooth connection parameter locally stored on the first electronic device is the same as a Bluetooth connection parameter locally stored on the second electronic device. For ease of description, in the first implementation, the Bluetooth connection parameter corresponding to the same version is referred to as a first Bluetooth connection parameter in the following.

S304: The first electronic device locally obtains the first Bluetooth connection parameter from the first electronic device, and the second electronic device locally obtains the first Bluetooth connection parameter from the second electronic device.

The first Bluetooth connection parameter is a Bluetooth connection parameter corresponding to the version of the first electronic device.

S305: The first electronic device and the second electronic device establish the Bluetooth connection based on the first Bluetooth connection parameter.

In the first implementation, if the versions are consistent, that is, the Bluetooth connection parameters of the two devices are consistent, a Bluetooth connection parameter may not need to be exchanged, for example, feature support and version specifications of an LMP do not need to be exchanged, and an SDP service inquiry does not need to be performed, but a Bluetooth connection parameter of a peer device may be directly obtained from a local device to establish the Bluetooth connection. In this way, an information exchange procedure in a Bluetooth connection process can be simplified, and a Bluetooth connection speed can be increased.

In a possible embodiment, before the two devices initiate the Bluetooth connection, a paging establishment procedure needs to be first completed between the two devices. For example, as shown in FIG. 3, before step S301, the method 300 may further include step S306.

S306: The first electronic device and the second electronic device establish paging.

For example, it is assumed that the second electronic device is in a discoverable and connectable state and may be discovered by using a broadcast message, and the first electronic device is in a listening state and may discover another electronic device by scanning the broadcast message. The broadcast message of the second electronic device may carry a device identifier or a Bluetooth address of the second electronic device. If the first electronic device finds the broadcast message through scanning, the first electronic device may discover the second electronic device based on the device identifier or the Bluetooth address carried in the broadcast message, and then send a paging message to the second electronic device. If the first electronic device returns a paging response to the second electronic device, paging between the first electronic device and the second electronic device succeeds.

Further, after the paging succeeds, the first electronic device may send the first version information to the second electronic device, that is, initiate a connection to the second electronic device, and when it is determined that the versions of the first electronic device and the second electronic device are the same, the first electronic device and the second electronic device directly invoke a Bluetooth connection parameter shared by the two devices, to establish the Bluetooth connection.

According to the Bluetooth connection method provided in this application, when the two electronic devices need to establish the Bluetooth connection, whether the versions of the two electronic devices are consistent may be first determined, and whether a Bluetooth connection parameter needs to be exchanged is further determined. If the versions are consistent, the Bluetooth connection parameters of the two devices are consistent, a Bluetooth connection parameter may not need to be exchanged, and the Bluetooth connection parameter of the peer device may be directly obtained from the local device to establish the Bluetooth connection. In this way, the information exchange procedure in the Bluetooth connection process can be simplified, and the Bluetooth connection speed can be increased.

The foregoing describes the Bluetooth connection method in a case in which the versions of the two devices are the same. However, when the versions of the two devices are different, if the two devices have been paired and connected and each have stored information about the peer device previously, the two devices may first determine whether the information about the peer device is changed in comparison with information used for the previous connection. If the information about the peer device is changed, changed information is exchanged to establish the connection. If the information about the peer device is not changed, no information needs to be exchanged, and the stored information about the peer device is directly invoked to establish the connection.

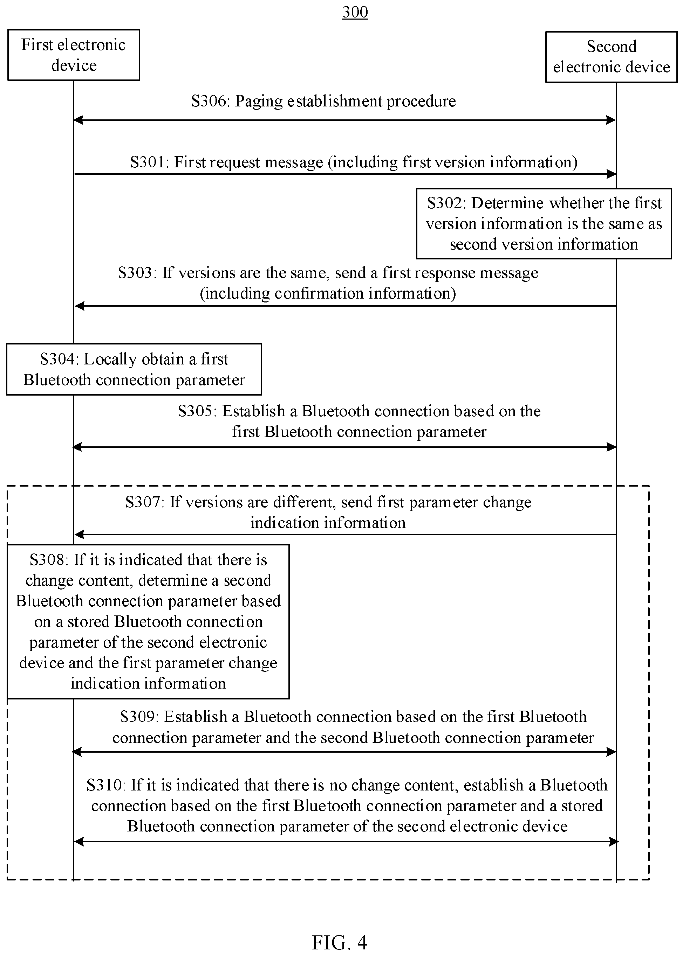

For example, with reference to FIG. 3, as shown in FIG. 4, the Bluetooth connection method provided in the first implementation of this application may further include the following S307 to S309, and a Bluetooth connection method in a case in which the versions of the two devices are different is described. It should be noted that, in the first implementation, it is assumed that the first electronic device and the second electronic device have been paired and connected before the current connection is established, and the two devices each have stored a Bluetooth connection parameter or information of the peer device on the local device. For example, the first electronic device locally stores a Bluetooth connection parameter of the second electronic device.

S307: When the confirmation information indicates that the version of the second electronic device is different from the version of the first electronic device, the first electronic device receives first parameter change indication information sent by the second electronic device.

The first parameter change indication information is used for indicating change content of the Bluetooth connection parameter of the second electronic device.

For example, the first parameter change indication information indicates that a frequency hopping parameter of the second electronic device is changed. In this case, the two devices need to perform information negotiation on the frequency hopping parameter, so that the two devices keep consistent on the frequency hopping parameter, to establish the connection more quickly.

Optionally, in the first implementation, when the confirmation information indicates that the version of the second electronic device is different from the version of the first electronic device, the first electronic device may send a first request message to the second electronic device, where the first request message is used for requesting to establish the Bluetooth connection to the second electronic device. Correspondingly, after receiving the first request message, the second electronic device may send a first response message to the first electronic device based on the first request message, where the first response message includes the first parameter change indication information. Further, after receiving the first response message, the first electronic device may obtain the first parameter change indication information from the first response message.

S308: If the first parameter change indication information indicates that there is change content, the first electronic device determines a second Bluetooth connection parameter of the second electronic device based on the stored Bluetooth connection parameter of the second electronic device and the change content indicated by the first parameter change indication information.

For example, if the Bluetooth connection parameter of the peer device is changed, the local device may obtain a changed Bluetooth connection parameter of the peer device, and update, by using the Bluetooth connection parameter, the Bluetooth connection parameter of the peer device that has been stored on the local device.

It should be noted that the Bluetooth connection parameter of the second electronic device is a Bluetooth connection parameter of the second electronic device that is locally stored on the first electronic device and that is used when the first electronic device is previously connected to the second electronic device, and may be directly and locally obtained from the first electronic device. The first electronic device may perform information refreshing or replacement on the Bluetooth connection parameter of the second electronic device by using the received first parameter change indication information, to obtain a latest Bluetooth connection parameter (that is, the second Bluetooth connection parameter) of the second electronic device.

S309: The first electronic device establishes the Bluetooth connection to the second electronic device based on the first Bluetooth connection parameter and the second Bluetooth connection parameter.

The second Bluetooth connection parameter is a latest Bluetooth connection parameter of the first electronic device that is locally stored on the first electronic device, and may also be directly and locally invoked from the first electronic device.

In the first implementation, the local device obtains a changed Bluetooth connection parameter of the peer device, and updates, by using the Bluetooth connection parameter, the Bluetooth connection parameter of the peer device that has been stored on the local device. The local device may establish the Bluetooth connection by using the updated Bluetooth connection parameter of the peer device and the Bluetooth connection parameter of the local device, without a need to exchange a Bluetooth connection parameter that is not changed. In this way, the information exchange procedure in the Bluetooth connection process can be simplified, and the Bluetooth connection speed can be increased.

The foregoing provides a description in a case in which the first parameter change indication information indicates that the first Bluetooth connection parameter has change content. The following provides a description in a case in which the first parameter change indication information indicates that the first Bluetooth connection parameter has no change content. As shown in FIG. 4, the Bluetooth connection method provided in this embodiment of this application further includes the following S310.

S310: If the first parameter change indication information indicates that there is no change content, the first electronic device establishes the Bluetooth connection to the second electronic device based on the first Bluetooth connection parameter and the stored Bluetooth connection parameter of the second electronic device.

In the first implementation, when the versions of the two devices are different, if the first parameter change indication information indicates that the first Bluetooth connection parameter has no change content, the two devices do not need to exchange information, for example, do not need to exchange feature support and version specifications of an LMP, and do not need to perform an SDP service inquiry, but may directly invoke the stored information of the peer device to establish the connection. In this way, the information exchange procedure in the Bluetooth connection process can be simplified, and the Bluetooth connection speed can be increased.

It should be noted that, in this application, either S308 and S309 are performed or S310 is performed. To be specific, in this application, S308 and S309 are performed when the first parameter change indication information indicates that there is change content; or S310 is performed when the first parameter change indication information indicates that there is no change content.

It should be further noted that, in this application, either S303 to S305 are performed or S307 to S309 (or S307 and S310) are performed. To be specific, in this application, S303 to S305 are performed when the versions of the two devices are the same; or S307 to S309 (or S307 and S310) are performed when the versions of the two devices are different.

Optionally, in the first implementation, some information may be changed in a case such as version upgrade. Therefore, in this application, a mask recording manner may be used, to map each omitted procedure point to one mask bit. If information about the local device is changed, the mask bit is flagged. When connection paging is established, the two devices first exchange a mask flag. If the information is changed, the two devices initiate corresponding negotiation and exchange in a subsequent procedure for the changed part.

Specifically, the second electronic device may flag the change content of the Bluetooth connection parameter of the second electronic device by flagging a mask, to obtain the first parameter change indication information. Certainly, the first electronic device may also flag change content of the Bluetooth connection parameter of the first electronic device by flagging a mask, to obtain second parameter change indication information.

For example, mask bits may include 0 and 1. An unchanged information part may be flagged as 0, and a changed information part may be flagged as 1; or certainly, an unchanged information part may be flagged as 1, and a changed information part may be flagged as 0. This may be specifically determined based on an actual use requirement, and is not limited in embodiments of this application.

A flagging rule in which an unchanged information part is flagged as 0 and a changed information part is flagged as 1 is used as an example. When the first electronic device receives the first parameter change indication information that is obtained by flagging a mask bit and that is sent by the second electronic device, information exchange, update, and negotiation may be performed, according to the foregoing flagging rule, on an information part flagged as 1.

According to the foregoing solution, the two devices each may identify changed information or node of the local device, and then the two devices exchange an information identifier. In this way, when establishing a connection, the two devices may identify, based on the information identifier, which information is changed, and re-negotiate and re-exchange the changed information without a need to exchange and negotiate information that is not changed. This can omit some exchange procedures during connection. Therefore, in this application, a connection establishment procedure can be simplified, the Bluetooth connection speed can be increased, and a waste of air interface interaction resources can be avoided.

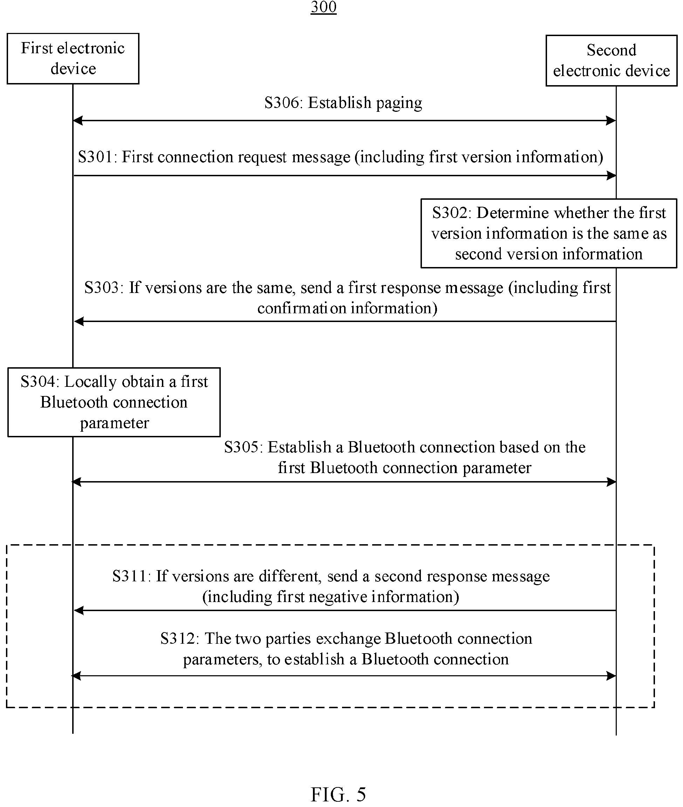

With reference to FIG. 4, the foregoing describes the Bluetooth connection method in a case in which the versions of the two devices are different. To be specific, when the versions of the two devices are different, parameter change indication information is exchanged, and information that needs to be exchanged is determined based on the parameter change indication information. With reference to FIG. 5, the following describes another Bluetooth connection method. To be specific, when versions of two devices are different, a Bluetooth connection may be established according to a standard parameter negotiation and exchange procedure. With reference to FIG. 3, as shown in FIG. 5, the Bluetooth connection method provided in this application may further include the following steps S311 and S312.

S311: If the versions are different, the second electronic device sends first negative information to the first electronic device, and the first electronic device receives the first negative information sent by the second electronic device.

The first negative information is used for indicating that the version of the second electronic device is different from the version of the first electronic device.

S312: The first electronic device and the second electronic device exchange their respective Bluetooth connection parameters, to establish the Bluetooth connection.

Specifically, when the Bluetooth communication protocol versions supported by the two devices are different, the two electronic devices negotiate and exchange information according to the standard parameter negotiation and exchange procedure, and then establish the Bluetooth connection based on the negotiated information.

For example, when the version of the second electronic device is different from the version of the first electronic device, the first electronic device sends a connection request message to the second electronic device, where the connection request message includes a Bluetooth connection parameter of the first electronic device. The second electronic device receives the connection request message sent by the second electronic device, and sends a response message to the first electronic device based on the connection request message, where the response message includes a Bluetooth connection parameter of the second electronic device. Further, the first electronic device receives the response message sent by the second electronic device, and then the first electronic device and the second electronic device establish the Bluetooth connection based on the Bluetooth connection parameter of the first electronic device and the Bluetooth connection parameter of the second electronic device.

It should be noted that the foregoing is merely an example description. For a specific description of the standard parameter negotiation and exchange procedure, refer to a related description of the standard parameter negotiation and exchange procedure in a related technology. Details are not described herein.

It should be noted that the foregoing provides an example description by using an example in which the first electronic device sends the first version information to initiate the connection. In actual implementation, embodiments of this application are not limited thereto. For example, the first electronic device may alternatively send a connection request message to another electronic device to initiate a connection, where the first version information is carried in the connection request message.

Specifically, as shown in FIG. 5, when the first electronic device and the second electronic device establish paging, the first electronic device may send a first request message to the second electronic device, where the first request message is used for requesting to establish the Bluetooth connection to the second electronic device, and the first request message includes the first version information. Correspondingly, after receiving the first request message, the second electronic device may compare the first version information with the second version information based on the first request message, to obtain a comparison result, and then send a first response message to the first electronic device, where the first response message includes the confirmation information. Further, after receiving the first response message, the first electronic device may determine, based on the first response message, whether the version of the first electronic device is the same as the version of the second electronic device. On one hand, if the versions are the same, the two devices may establish the Bluetooth connection by using the first Bluetooth connection parameter corresponding to the same version shared by the two devices, without a need to exchange information. In this way, a Bluetooth connection procedure can be simplified. On the other hand, if the versions are different, the second electronic device sends a second response message to the first electronic device, and the first electronic device receives the second response message sent by the second electronic device, where the second response message includes the first negative information. Further, the first electronic device and the second electronic device exchange their respective Bluetooth connection parameters, to establish the Bluetooth connection. To be specific, when the first electronic device determines, based on the second response message, that the version of the first electronic device is different from the version of the second electronic device, the first electronic device negotiates and exchanges information according to a transmitted protocol standard procedure, and then establishes the Bluetooth connection to the second electronic device by using the negotiated information.

In conclusion, in the first implementation, if the Bluetooth communication protocol versions supported by the two devices are the same, the two devices may not need to exchange a Bluetooth connection parameter, and each may directly obtain a Bluetooth connection parameter of the peer device from the local device to establish the Bluetooth connection. If the Bluetooth communication protocol versions supported by the two devices are different, the two devices establish the connection after exchanging information according to a conventional protocol standard procedure.

Processes in which the two devices establish the Bluetooth connection in different manners when the versions are the same and when the versions are different are described in the foregoing. This is implemented without considering a dynamic factor in a connection establishment process, that is, the first Bluetooth connection parameter is a static parameter. In actual implementation, when the versions of the two devices are the same, the two devices may further need to negotiate some dynamically changed parameters during connection, for example, a connection establishment request, a clock, and a frequency hopping parameter. The two devices may exchange such dynamically changed information and operations according to a normal procedure. The first request message and the first response message may be further used for carrying a dynamically changed parameter that needs to be negotiated. It is assumed that the versions of the first electronic device and the second electronic device are the same. After the first electronic device and the second electronic device are paired, some information and operations of the two devices may be dynamically changed. In this case, the first electronic device and the second electronic device may exchange a dynamically changed parameter, and then establish the Bluetooth connection based on the first Bluetooth connection parameter and the dynamically changed parameter.

For example, the first electronic device sends a dynamically changed third Bluetooth connection parameter of the first electronic device to the second electronic device. Then, the second electronic device receives the third Bluetooth connection parameter, and sends a dynamically changed fourth Bluetooth connection parameter of the second electronic device to the first electronic device based on the third Bluetooth connection parameter. Afterwards, the first electronic device may establish the Bluetooth connection to the second electronic device based on the first Bluetooth connection parameter, the third Bluetooth connection parameter, and the fourth Bluetooth connection parameter. The third Bluetooth connection parameter may include at least one of the following: a connection request, a clock, a frequency hopping parameter, and the like. Similarly, the fourth Bluetooth connection parameter may include at least one of the following: a connection response, a clock, a frequency hopping parameter, and the like. In this way, when the two devices each obtain a static parameter of the peer device, the two devices may negotiate and exchange a dynamically changed parameter, to implement the Bluetooth connection.

In this embodiment of this application, according to the Bluetooth connection method provided in this application, for information that is not changed after Bluetooth pairing is established, a negotiation and exchange procedure during connection re-establishment can be omitted. Information that may be semi-statically changed with version upgrade may be distinguished and identified by identifying changed information, and when a connection is re-established after the information is changed, information refreshing may be performed through negotiation and exchange.

In this way, when the two devices having a same version establish a Bluetooth connection, a shared Bluetooth connection parameter may be shared for use and does not need to be exchanged and transmitted to a peer device, and only some dynamically changed parameters need to be exchanged and negotiated, so that the Bluetooth connection can be established by using the shared Bluetooth connection parameter and the negotiated dynamically changed parameters. This can simplify the Bluetooth connection process, and increase the Bluetooth connection speed.

It should be noted that the Bluetooth connection method provided in the first implementation of this application is applicable to a scenario in which electronic devices of a same device model establish a Bluetooth connection. For example, the first electronic device and the second electronic device are respectively a first earphone and a second earphone of TWS earphones. Optionally, the first earphone is a primary earphone, and the second earphone is a secondary earphone; or the first earphone is a secondary earphone, and the second earphone is a primary earphone. This is not limited in embodiments of this application.

For example, for a scenario in which the two earphones of the TWS earphones are interconnected, the two earphones of the TWS usually work as a set, and the left earphone and the right earphone are peer devices. Therefore, in addition to a parameter that needs to be dynamically negotiated, information about a peer earphone can be completely obtained by the local earphone. In addition, some information may be changed with software version upgrade, but the information is not dynamically changed. Therefore, the information may be bound to a version. If versions of the left earphone and the right earphone are inconsistent, a negotiation and exchange procedure needs to be performed, and the exchange may be omitted after the versions of the two earphones are consistent through upgrade.

When the left earphone and the right earphone establish paging, version consistency of the two earphones is checked first. On one hand, if the versions of the two earphones are consistent, the earphone obtains information from the local earphone, instead of obtaining information from the peer earphone through exchange according to a procedure. Information and operations that are dynamically changed, for example, a connection establishment request, a clock, and a frequency hopping parameter, are exchanged according to a normal procedure. On the other hand, if the versions of the two earphones are inconsistent, negotiation and exchange are completed according to a standard Bluetooth connection establishment procedure.

In conclusion, when the two earphones of the TWS earphones are paired and connected, as long as the versions of the two earphones are consistent, it may be considered that information related to the versions and capabilities of the two earphones is consistent. Static information of the peer earphone may be directly obtained from the local earphone, instead of being obtained in a manner in which a Bluetooth connection parameter is obtained through negotiation and exchange in a related technology. This can simplify the Bluetooth connection process, and increase the Bluetooth connection speed. In comparison with an existing solution in which a standard parameter negotiation and exchange procedure needs to be completed each time when the two earphones of the TWS earphones are paired for the first time and subsequently connected, in the Bluetooth connection method provided in this embodiment of this application, some negotiation and exchange procedures can be omitted when the two earphones of the TWS earphones are paired for the first time and subsequently connected. Therefore, a connection establishment delay can be shortened.

Certainly, the Bluetooth connection method is also applicable to a scenario in which electronic devices of different device models (for example, the electronic device and the second electronic device are respectively a mobile phone and a speaker) establish a Bluetooth connection.

It should be noted that the Bluetooth connection method provided in this embodiment of this application is not only applicable to a scenario in which after devices are paired, the devices establish a Bluetooth connection each time, but also applicable to a scenario in which devices are paired and connected for the first time. When the two electronic devices are paired and connected for the first time, whether the Bluetooth communication protocol versions supported by the two electronic devices are the same may be first determined. If the versions are the same, the two devices perform pairing and establish a Bluetooth connection by using a Bluetooth connection parameter or information shared by the two devices. If the versions are different, the two devices exchange their respective Bluetooth connection parameters or information according to a standard parameter negotiation and exchange procedure, to perform pairing and establish a connection.

In a connection procedure in a related technology, a protocol standard procedure is usually used. To be specific, both parties need to negotiate and exchange information and then establish a connection based on the negotiated information. For known information shared by the both parties, if negotiation and information exchange are performed again during each connection, air interface interaction resources are wasted. In comparison with the related technology, in the Bluetooth connection method provided in this embodiment of this application, when a connection is to be established, whether the versions of the two devices are consistent is first determined. To be specific, if the versions are consistent, connection parameters of the two devices are the same, it is unnecessary to perform negotiation and information exchange again, and a Bluetooth connection parameter of a peer device is directly obtained from a local device, to establish the Bluetooth connection. In this way, the connection establishment procedure can be simplified, the Bluetooth connection speed can be increased, and a waste of air interface interaction resources can be avoided.

It should be noted that embodiments of this application include but are not limited to the foregoing implementation in which one device determines whether the versions of the two devices are the same, and then notifies the other device of a determining result. In actual implementation, embodiments of this application may further include another possible implementation. For example, the two devices may exchange their respective version information, and then the two devices determine whether the versions of the two devices are the same. For example, the first electronic device sends the first version information to the second electronic device, the second electronic device sends the second version information to the first electronic device, the first electronic device compares the first version information of the local device with the second version information of the peer device to determine whether the versions of the two devices are the same, and the second electronic device compares the second version information of the local device with the first version information of the peer device to determine whether the versions of the two devices are the same. In this application, there may be a plurality of possible implementations for determining, based on version information of devices, whether versions of the devices are the same. This is specifically determined based on an actual use requirement, and is not limited in embodiments of this application.

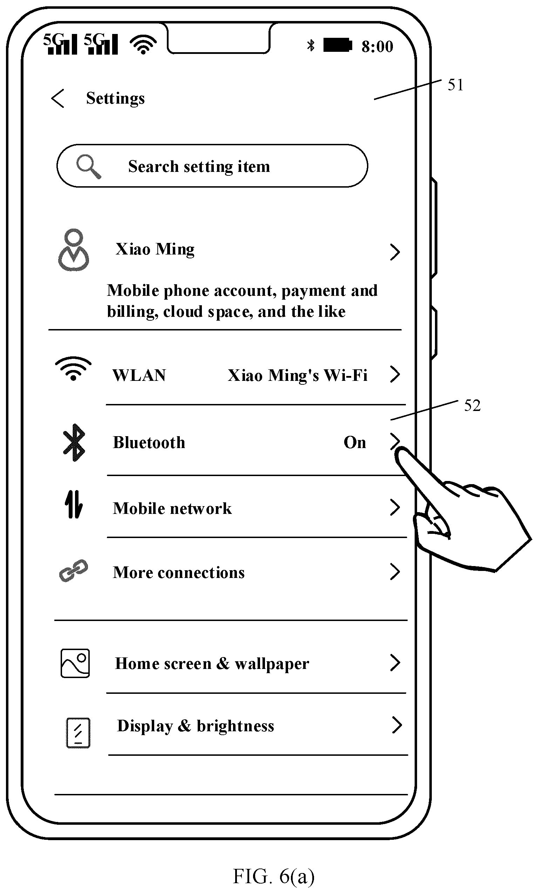

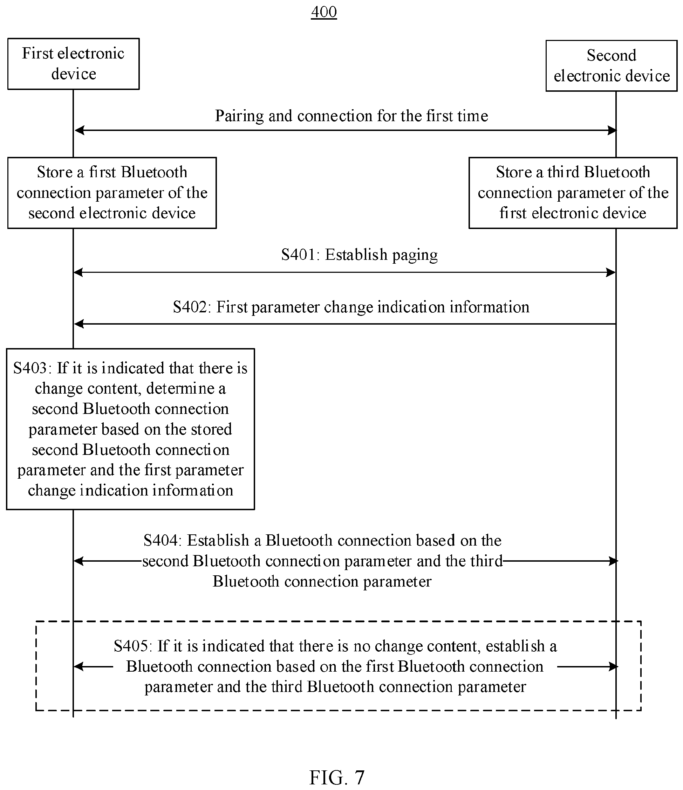

The Bluetooth connection method provided in the first implementation in embodiments of this application is described above with reference to FIG. 3 to FIG. 5. The following describes, with reference to FIG. 6(a) to FIG. 6(d) and FIG. 7, the Bluetooth connection method provided in the second implementation in embodiments of this application.

First, it should be noted that, in the second implementation, it is assumed that a first electronic device and a second electronic device have been paired before a current connection is established, and the two devices each have stored a Bluetooth connection parameter or information of the peer device on the local device, so that the Bluetooth connection parameter or information is invoked when the two devices are connected again subsequently. The following describes an example of a pairing process between electronic devices with reference to FIG. 6(a) to FIG. 6(d).

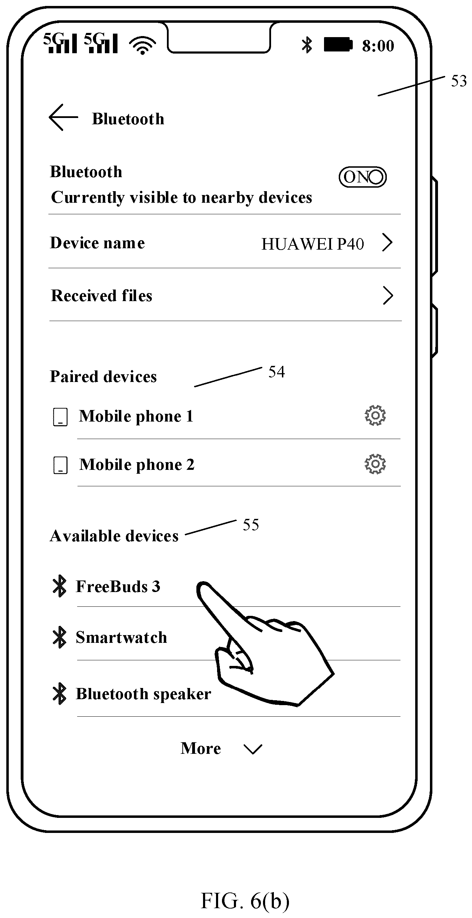

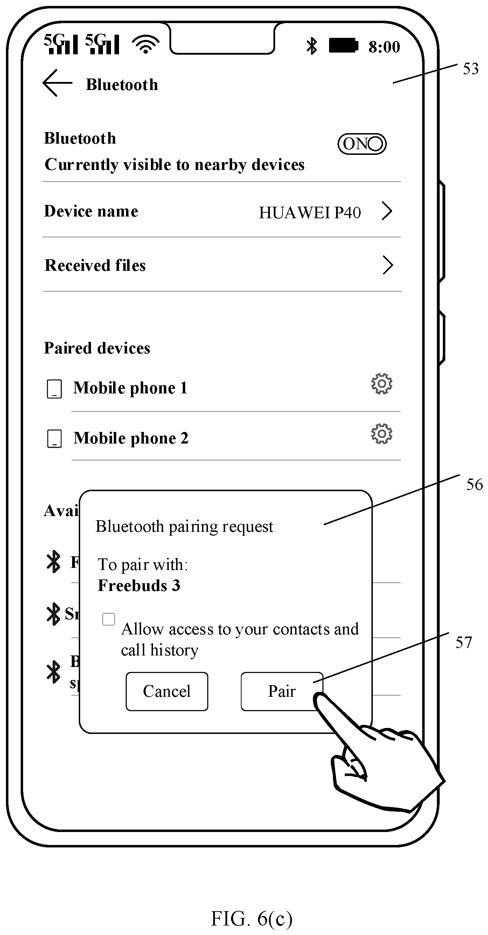

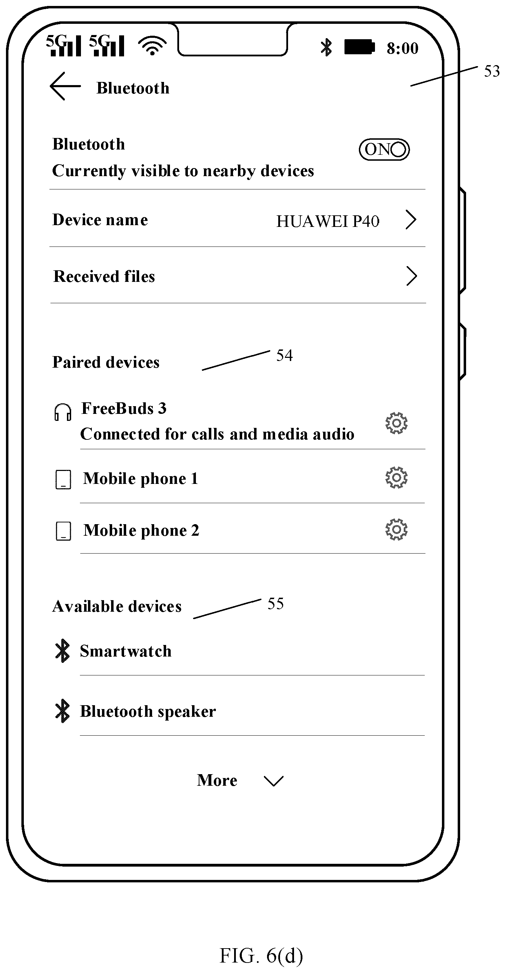

As shown in FIG. 6(a), the first electronic device currently displays a setting interface 51, and the first electronic device receives a selection operation performed by a user on a Bluetooth option 52 in the setting interface 51. As shown in FIG. 6(b), the first electronic device displays a Bluetooth setting interface 53 in response to the operation of the user. The Bluetooth setting interface 53 displays that Bluetooth is in an on state, and includes a list 54 of paired devices and a list 55 of available devices. For example, the list 54 of paired devices includes a mobile phone 1 and a mobile phone 2. For example, the list 55 of available devices includes FreeBuds 3, a smartwatch, and a Bluetooth speaker. The first electronic device receives a selection operation performed by the user on an item FreeBuds 3 in the list 55 of available devices. As shown in FIG. 6(c), the first electronic device displays a Bluetooth pairing request interface 56 in the Bluetooth setting interface 53 in response to the operation of the user, to prompt the user whether to perform pairing with the earphones FreeBuds 3. The first electronic device receives a selection operation performed by the user on a pairing item 57 in the Bluetooth pairing request interface 56, and the first electronic device performs information exchange and negotiation with the earphones FreeBuds 3 in response to the operation of the user. As shown in FIG. 6(d), the first electronic device hides the Bluetooth pairing request interface 56, and updates the Bluetooth setting interface 53, where the item FreeBuds 3 is added to the list 54 of paired devices. In this way, the first electronic device completes pairing with the earphones, and in this case, the first electronic device stores a Bluetooth connection parameter of the earphones.

After pairing is completed for the first time, the electronic device obtains the Bluetooth connection parameter of the peer device, for example, attribute information and feature capability information. On one hand, if the information is not changed during next connection, the information does not need to be obtained through re-exchange during the connection. This reduces a connection delay caused by information exchange. On the other hand, if a part of the information is changed due to version upgrade or another reason, the two devices may exchange and refresh the information change part as required when establishing a connection.

FIG. 7 is a flowchart of the Bluetooth connection method according to the second implementation of this application. As shown in FIG. 7, the method 400 includes the following steps S401 to S405.

S401: A first electronic device and a second electronic device establish paging.

First, it should be noted that, before S401, the first electronic device and the second electronic device have been paired, the first electronic device stores a Bluetooth connection parameter (it is assumed that the Bluetooth connection parameter is referred to as a first Bluetooth connection parameter) of the second electronic device, and the second electronic device stores a Bluetooth connection parameter (it is assumed that the Bluetooth connection parameter is referred to as a third Bluetooth connection parameter) of the first electronic device.

S402: The second electronic device sends first parameter change indication information to the first electronic device, and the first electronic device receives the first parameter change indication information sent by the second electronic device.

The first parameter change indication information is used for indicating change content of the first Bluetooth connection parameter of the second electronic device.

For example, the first parameter change indication information indicates that a frequency hopping parameter of the second electronic device is changed. In this case, the two devices need to perform information negotiation on the frequency hopping parameter, so that the two devices keep consistent on the frequency hopping parameter, to establish a connection more quickly.

Optionally, in the second implementation, when the second electronic device finds the first electronic device through scanning or discovers the first electronic device, the second electronic device may send the first parameter change indication information to the first electronic device, to initiate a Bluetooth connection. Alternatively, when the first electronic device finds the second electronic device through scanning or discovers the second electronic device, the first electronic device may send a connection request message to the second electronic device, to initiate a connection. When receiving the connection request message, the second electronic device sends the first parameter change indication information to the first electronic device. For example, when the first electronic device and the second electronic device establish paging, the first electronic device may send a first request message to the second electronic device, where the first request message is used for requesting to establish the Bluetooth connection to the second electronic device. Correspondingly, after receiving the first request message, the second electronic device may send a first response message to the first electronic device based on the first request message, where the first response message includes the first parameter change indication information. Further, after receiving the first response message, the first electronic device may obtain the first parameter change indication information from the first response message.

It should be noted that, herein, the first electronic device sends the first request message to the second electronic device, which is equivalent to initiating a connection. In this case, the first electronic device is a primary device. The second electronic device receives the first request message and feeds back the first response message to the first electronic device, which is equivalent to accepting the connection. In this case, the second electronic device may be used as a secondary device.

In the second implementation, before the two devices initiate the Bluetooth connection, a paging establishment procedure needs to be first completed between the two devices. For a specific description of establishing paging between the first electronic device and the second electronic device, refer to the detailed description of establishing paging between the devices in the first implementation. Details are not described herein again.

S403: If the first parameter change indication information indicates that there is change content, the first electronic device determines a second Bluetooth connection parameter of the second electronic device based on the stored first Bluetooth connection parameter and the change content indicated by the first parameter change indication information.

For example, if a Bluetooth connection parameter of a peer device is changed, a local device may obtain a changed Bluetooth connection parameter of the peer device, and update, by using the Bluetooth connection parameter, a first Bluetooth connection parameter of the peer device that has been stored on the local device.

It should be noted that the first Bluetooth connection parameter is a Bluetooth connection parameter that is locally stored on the first electronic device and that corresponds to the second electronic device, and may be directly and locally obtained from the first electronic device. The first electronic device may perform information refreshing or replacement on the first Bluetooth connection parameter by using the received first parameter change indication information, to obtain a latest Bluetooth connection parameter (that is, the second Bluetooth connection parameter) of the second electronic device.

S404: The first electronic device and the second electronic device establish the Bluetooth connection based on the second Bluetooth connection parameter and the third Bluetooth connection parameter.

The third Bluetooth connection parameter is a Bluetooth connection parameter that is locally stored on the first electronic device and that corresponds to the first electronic device, and may also be directly and locally invoked from the first electronic device.

In the second implementation, the local device obtains a changed Bluetooth connection parameter of the peer device, and updates, by using the Bluetooth connection parameter, the Bluetooth connection parameter of the peer device that has been stored on the local device. The local device may establish the Bluetooth connection by using the updated Bluetooth connection parameter of the peer device and the Bluetooth connection parameter of the local device, without a need to exchange a Bluetooth connection parameter that is not changed. In this way, an information exchange procedure in a Bluetooth connection process can be simplified, and a Bluetooth connection speed can be increased.

S405: If the first parameter change indication information indicates that there is no change content, the first electronic device and the second electronic device establish the Bluetooth connection based on the stored first Bluetooth connection parameter and the third Bluetooth connection parameter.

In the second implementation, if the first parameter change indication information indicates that the Bluetooth connection parameter of the second electronic device has no change content, information about the peer device does not need to be exchanged, and stored information about the peer device is directly invoked to establish the connection. In this way, the information exchange procedure in the Bluetooth connection process can be simplified, and the Bluetooth connection speed can be increased.

It should be noted that, in this application, either S403 and S404 are performed or S405 is performed. To be specific, in this application, S403 and S404 are performed when the first parameter change indication information indicates that there is change content; or S405 is performed when the first parameter change indication information indicates that there is no change content.

It should be noted that, the foregoing is described by using an example in which the local device obtains changed information of the peer device. In actual implementation, when information of the local device is changed, the local device may also send changed information of the local device to the peer device, to indicate the peer device to refresh information stored on the peer device. In this way, the two devices may exchange an information change part during connection establishment. This can simplify a connection establishment procedure, increase the Bluetooth connection speed, and avoid a waste of air interface interaction resources.

For example, the first electronic device may send second parameter change indication information to the second electronic device, and the second electronic device receives the second parameter change indication information sent by the second electronic device. The second parameter change indication information is used for indicating change content of the Bluetooth connection parameter of the first electronic device. Then, the second electronic device may determine the third Bluetooth connection parameter of the first electronic device based on the change content indicated by the second parameter change indication information.

For example, the second parameter change indication information indicates that a clock parameter of the first electronic device is changed. In this case, the two devices need to perform information negotiation on the clock parameter, so that the two devices keep consistent on the clock parameter, to establish a connection more quickly.

Optionally, when sending the first request message to the second electronic device, the first electronic device may add the second parameter change indication information to the first request message.

Similar to that the first electronic device performs, based on the first parameter change indication information, information refreshing or replacement on the Bluetooth connection parameter of the second electronic device that is locally stored, the second electronic device may perform, based on the second parameter change indication information, information refreshing or replacement on the Bluetooth connection parameter of the first electronic device that is locally stored, to obtain a latest Bluetooth connection parameter of the first electronic device. Further, after the second electronic device determines the latest Bluetooth connection parameter of the first electronic device, and the first electronic device determines the latest second Bluetooth connection parameter of the second electronic device, the second electronic device and the first electronic device may establish the Bluetooth connection based on the latest Bluetooth connection parameter of the second electronic device and the latest Bluetooth connection parameter of the first electronic device. In this way, the two devices may exchange an information change part during connection establishment. This can simplify the connection establishment procedure, increase the Bluetooth connection speed, and avoid the waste of air interface interaction resources.

According to the Bluetooth connection method provided in this application, when the two electronic devices need to establish the Bluetooth connection, whether the Bluetooth connection parameter of the peer device is changed may be first determined, and whether the Bluetooth connection parameter needs to be exchanged or which Bluetooth connection parameter needs to be exchanged is further determined. If the Bluetooth connection parameter of the peer device is not changed, a Bluetooth connection parameter may not need to be exchanged, and the Bluetooth connection parameter of the peer device that has been stored is directly obtained from the local device to establish the Bluetooth connection. If the Bluetooth connection parameter of the peer device is changed, only changed information may be exchanged to establish the Bluetooth connection. In this way, the information exchange procedure in the Bluetooth connection process can be simplified, and the Bluetooth connection speed can be increased.

It should be noted that for a connection between non-peer-to-peer devices (for example, earphones are connected to a mobile phone) except a connection between peer-to-peer devices such as TWS earphones, some exchange procedures during connection can be omitted by using the method provided in the second implementation. Specifically, for a Bluetooth connection combination of earphones and a mobile phone, because information about a peer end cannot be obtained before pairing, the information cannot be locally obtained in a TWS binaural mode. However, when pairing is established for the first time, static configuration and capability information of the peer end is obtained after pairing is established and negotiation and exchange are performed according to a standard procedure. The local device records the information about the peer device. When a connection is to be established next time, re-negotiation and re-exchange can be omitted.

Optionally, in the Bluetooth connection method provided in the second implementation of this application, if a part of the information is changed due to version upgrade or another reason, the two devices may flag the changed information. When the two devices each identify that the information of the peer device is changed after exchanging a flag, the two devices may exchange and refresh the information change part as required when establishing a connection. For example, the first parameter change indication information may be information obtained by flagging a mask.

In the second implementation, some information may be changed in a case such as version upgrade. Therefore, in this application, a mask recording manner may be used, to map each omitted procedure point to one mask bit. If information about the local device is changed, the mask bit is flagged. When connection paging is established, the two devices first exchange a mask flag. If the information is changed, the two devices initiate corresponding negotiation and exchange in a subsequent procedure for the changed part.

For example, mask bits may include 0 and 1. An unchanged information part may be flagged as 0, and a changed information part may be flagged as 1; or certainly, an unchanged information part may be flagged as 1, and a changed information part may be flagged as 0. This may be specifically determined based on an actual use requirement, and is not limited in embodiments of this application.

A flagging rule in which an unchanged information part is flagged as 0 and a changed information part is flagged as 1 is used as an example. When the first electronic device receives the first parameter change indication information that is obtained by flagging a mask bit and that is sent by the second electronic device, information exchange, update, and negotiation may be performed, according to the foregoing flagging rule, on an information part flagged as 1.

According to the foregoing solution, the two devices each may identify changed information or node of the local device, and then the two devices exchange an information identifier. In this way, when establishing a connection, the two devices may identify, based on the information identifier, which information is changed, and re-negotiate and re-exchange the changed information without a need to exchange and negotiate information that is not changed. This can omit some exchange procedures during connection. Therefore, in this application, the connection establishment procedure can be simplified, the Bluetooth connection speed can be increased, and the waste of air interface interaction resources can be avoided.

It should be noted that, a difference from a scenario in which two earphones of the TWS earphones are connected in the first implementation lies in that, in the second implementation, information about a peer device needs to be obtained through first pairing and then recorded, and a mask bit is used for indicating a subsequent change of the information. In consideration of a conventional Bluetooth connection combination, in a manner in which the local device stores the information about the peer device, some unnecessary negotiation and exchange can be omitted when the information is not changed or is partially changed. For example, connection-based information negotiation and exchange are not triggered as long as the information is not changed. For another example, if the information is changed, corresponding negotiation and exchange are initiated for the changed part. Therefore, based on an improvement of the solutions in this application, an exchange procedure can be omitted during connection, to increase a connection speed.

In a connection procedure in a related technology, a protocol standard procedure is usually used. To be specific, both parties need to negotiate and exchange information and then establish a connection based on the negotiated information. For some unchanged information, if negotiation and information exchange are performed again during each connection, air interface interaction resources are wasted. In comparison with the related technology, according to the solutions of this application, for unchanged information, the information does not need to be obtained through exchange again during connection, and for information that is changed due to version upgrade or another reason, the information change part may be exchanged as required when a connection is established, so that a connection delay caused by information exchange can be shortened. Therefore, in this application, the Bluetooth connection speed can be increased, and the waste of air interface interaction resources can be avoided.

In conclusion, the Bluetooth connection method provided in this application is applicable to the following scenario 1 and scenario 2. Information exchange and parameter negotiation in a connection process can be omitted by using the Bluetooth connection method.

Scenario 1: After pairing and connection for the first time, information that is not changed in a product life cycle is recorded on two connection parties, and is not exchanged during next connection.

Scenario 2: For information that may be semi-statically changed, the following manner (a) or (b) is used, so that information exchange and parameter negotiation in a connection process are omitted.
(a) For information associated with a version, after connection paging succeeds, version information is first exchanged. If a version is not updated, it is determined that the information is not changed in comparison with that in a previous connection. In this case, negotiation and exchange do not need to be performed in a subsequent procedure.
(b) An information item is identified by using a bit mask. After connection paging succeeds, a mask bit is first exchanged. If the information item is not changed, negotiation and exchange do not need to be performed in a subsequent procedure. If the information is changed, corresponding negotiation and exchange are initiated for the changed part.

Embodiments described in this specification may describe independent solutions, or may be combined based on internal logic, to achieve different technical effects.

A specific structure of an execution body of the method provided in embodiments of this application is not specifically limited in embodiments of this application, provided that a program that records code of the method provided in embodiments of this application can be run to implement the method provided in embodiments of this application. For example, the method provided in embodiments of this application may be performed by the first electronic device, or may be performed by a functional module that is in the first electronic device and that can invoke and execute the program. To implement the functions in the method provided in the foregoing embodiments of this application, the first electronic device may include a hardware structure and/or a software module, to implement the foregoing functions in a form of the hardware structure, the software module, or a combination of the hardware structure and the software module. Whether a function in the foregoing functions is performed in a form of the hardware structure, the software module, or the combination of the hardware structure and the software module depends on particular applications and design constraints of the technical solutions.

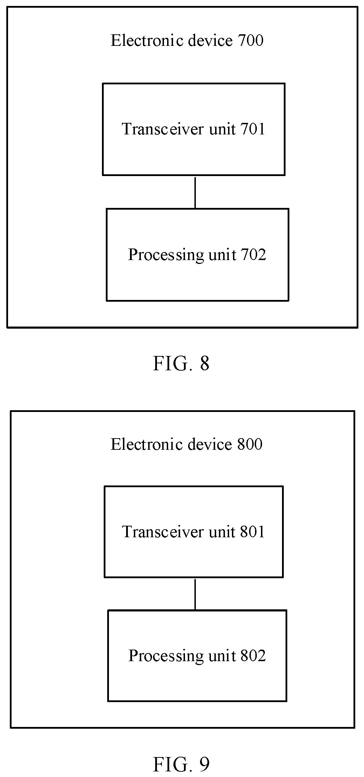

FIG. 8 is a schematic block diagram of an electronic device 700 according to an embodiment of this application. The electronic device 700 includes a transceiver unit 701 and a processing unit 702.

The transceiver unit 701 is configured to send first version information of the electronic device 700 to the second electronic device when the electronic device 700 establishes paging with a second electronic device, where the first version information is used for indicating a version of the electronic device 700.

The transceiver unit 701 is further configured to receive confirmation information sent by the second electronic device, where the confirmation information is used for indicating that a version of the second electronic device is the same as the version of the electronic device 700.

The processing unit 702 is configured to establish a Bluetooth connection to the second electronic device based on a first Bluetooth connection parameter, where the first Bluetooth connection parameter is a Bluetooth connection parameter corresponding to the version of the electronic device 700.

In a possible embodiment, the transceiver unit 701 is further configured to: when the version of the second electronic device is different from the version of the electronic device 700, receive first parameter change indication information sent by the second electronic device, where the first parameter change indication information is used for indicating change content of a Bluetooth connection parameter of the second electronic device.

The processing unit 702 is further configured to determine a second Bluetooth connection parameter of the second electronic device based on the stored Bluetooth connection parameter of the second electronic device and the change content indicated by the first parameter change indication information.

The processing unit 702 is further configured to establish the Bluetooth connection to the second electronic device based on the first Bluetooth connection parameter and the second Bluetooth connection parameter.

In a possible embodiment, the transceiver unit 701 is further configured to: if the first parameter change indication information indicates that the first Bluetooth connection parameter has no change content, establish the Bluetooth connection to the second electronic device based on the first Bluetooth connection parameter and the stored Bluetooth connection parameter of the second electronic device.

In a possible embodiment, the first parameter change indication information is information obtained by flagging a mask.

In a possible embodiment, the transceiver unit 701 is specifically configured to: send a first request message to the second electronic device, and receive a first response message sent by the second electronic device for the first request message, where the first request message includes the first version information, and the first response message includes the confirmation information.

In a possible embodiment, the first Bluetooth connection parameter is a static parameter. The transceiver unit 701 is further configured to: send a dynamically changed third Bluetooth connection parameter of the electronic device 700 to the second electronic device; and receive a dynamically changed fourth Bluetooth connection parameter of the second electronic device that is sent by the second electronic device. The processing unit 702 is further configured to establish the Bluetooth connection to the second electronic device based on the first Bluetooth connection parameter, the third Bluetooth connection parameter, and the fourth Bluetooth connection parameter.

In a possible embodiment, the transceiver unit 701 is further configured to: when the confirmation information indicates that the version of the second electronic device is different from the version of the electronic device 700, send a second request message to the second electronic device, where the second request message includes the first Bluetooth connection parameter of the electronic device 700.

The transceiver unit 701 is further configured to receive a second response message sent by the second electronic device, where the second response message includes the second Bluetooth connection parameter of the second electronic device.

The processing unit 702 is further configured to establish the Bluetooth connection to the second electronic device based on the first Bluetooth connection parameter and the second Bluetooth connection parameter.

The electronic device 700 according to this embodiment of this application may correspondingly perform the method steps corresponding to the first electronic device described in the first implementation of this application, and the foregoing and other operations and/or functions of the modules in the electronic device 700 are separately used for implementing corresponding procedures of the method. For brevity, details are not described herein again.

When the electronic device provided in this embodiment of this application establishes a Bluetooth connection to another electronic device, whether versions of the two electronic devices are consistent may be first determined, and whether a Bluetooth connection parameter needs to be exchanged is further determined. If the versions are consistent, Bluetooth connection parameters of the two devices are consistent, a Bluetooth connection parameter may not need to be exchanged, and a Bluetooth connection parameter of a peer device may be directly obtained from a local device to establish the Bluetooth connection. In this way, an information exchange procedure in a Bluetooth connection process can be simplified, and a Bluetooth connection speed can be increased.

FIG. 9 is a schematic block diagram of an electronic device 800 according to an embodiment of this application. The electronic device 800 includes a transceiver unit 801 and a processing unit 802.

The transceiver unit 801 is configured to receive first parameter change indication information sent by a second electronic device, where the first parameter change indication information is used for indicating change content of a first Bluetooth connection parameter of the second electronic device.

The processing unit 802 is configured to determine a second Bluetooth connection parameter of the second electronic device based on the stored first Bluetooth connection parameter and the change content indicated by the first parameter change indication information.

The processing unit 802 is further configured to establish a Bluetooth connection to the second electronic device based on the second Bluetooth connection parameter of the second electronic device and a third Bluetooth connection parameter of the first electronic device.

In a possible embodiment, the transceiver unit 801 is further configured to: before receiving the first parameter change indication information sent by the second electronic device, send a first request message to the second electronic device, where the first request message is used for requesting to establish the Bluetooth connection to the second electronic device; and the transceiver unit 801 is further configured to receive a first response message sent by the second electronic device for the first request message, where the first response message includes the first parameter change indication information.

In a possible embodiment, the processing unit 802 is further configured to: when the first parameter change indication information indicates that the first Bluetooth connection parameter has no change content, establish the Bluetooth connection to the second electronic device based on the stored first Bluetooth connection parameter and the third Bluetooth connection parameter.

In a possible embodiment, the first parameter change indication information is information obtained by flagging a mask.

When the electronic device provided in this embodiment of this application establishes a Bluetooth connection to another electronic device, whether a Bluetooth connection parameter of a peer device is changed may be first determined, and whether a Bluetooth connection parameter needs to be exchanged or which Bluetooth connection parameter needs to be exchanged is further determined. If the Bluetooth connection parameter of the peer device is changed, only changed information may be exchanged to establish the Bluetooth connection. In this way, an information exchange procedure in a Bluetooth connection process can be simplified, and a Bluetooth connection speed can be increased.

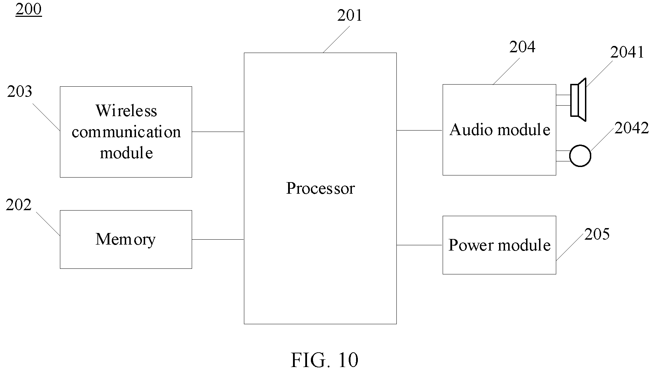

FIG. 10 is a schematic diagram of hardware of an electronic device 200 according to an embodiment of this application. The electronic device 200 may be an example of the Bluetooth earphones or the mobile phone described in FIG. 1. As shown in FIG. 10, the electronic device 200 may include a processor 201, a memory 202, a wireless communication module 203, an audio module 204, a power module 205, and the like. These components may communicate with each other through one or more communication buses or signal cables (not shown in the figure). The following describes the components of the electronic device in detail with reference to FIG. 2.

The processor 201 is a control center of the electronic device, is connected to each part of the electronic device by using various interfaces and lines, and performs various functions of the electronic device and processes data by running or executing an application program stored in the memory 202 and invoking data stored in the memory 202. The processor 101 may include one or more processing units. Different processing units may be independent components, or may be integrated into one or more processors 201. The processor 201 may be specifically an integrated control chip, or may include a circuit including various active components and/or passive components, and the circuit is configured to perform a function that is of the processor 201 and that is described in embodiments of this application. For example, the electronic device is the Bluetooth earphones 11. The processor 201 may be configured to execute a related application program, and invoke a related module, to implement a function of the Bluetooth earphones 11 in embodiments of this application. For example, a physical connection and/or a service specification connection between the Bluetooth earphones 11 and the mobile phone 12 are/is implemented.

It should be understood that in this embodiment of this application, the processor 201 may use a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, discrete gate or transistor logic device, discrete hardware component, or the like. The general-purpose processor may be a microprocessor, or the processor may be any conventional processor or the like. Alternatively, the processor 201 uses one or more integrated circuits, and is configured to execute a related program, to implement technical solutions provided in embodiments of this application.

The memory 202 is configured to store the application program and the data. The processor 201 performs various functions of the electronic device and processes data by running the application program and the data that are stored in the memory 202. The memory 202 mainly includes a program storage area and a data storage area. The program storage area may store an operating system and an application program that is required for at least one function. The data storage area may store data created based on use of the electronic device. For example, the electronic device is the Bluetooth earphones 11. The memory 202 may store program code used for the physical connection and/or the service specification connection between the Bluetooth earphones 11 and the mobile phone 12, program code used for charging the Bluetooth earphones 11, program code used for wireless pairing and connection between the Bluetooth earphones 11 and the mobile phone 12, and the like.

In addition, the memory 202 may include a read-only memory or a random access memory, or may include a nonvolatile memory such as a magnetic disk storage device, a flash memory device, or another volatile solid-state storage device, and provide instructions and data for the processor 201. The memory 202 may store various operating systems. The memory 202 may be independent of the processor 201, and is connected to the processor 201 through the communication bus. Alternatively, the memory 202 may be integrated with the processor 201.

The wireless communication module 203 may be configured to support implementation of a wireless connection and wireless communication between electronic devices by using a wireless communication technology. For example, with reference to FIG. 1, the Bluetooth earphones 11 and the mobile phone 12 may implement data exchange by using their respective wireless communication modules 203. In some embodiments, the wireless communication module 203 may be a Bluetooth chip. With reference to FIG. 1, the Bluetooth chip of the Bluetooth earphones 11 and a Bluetooth chip of the mobile phone 12 may be paired and establish a wireless connection, to implement wireless communication and service processing between the Bluetooth earphones 11 and the mobile phone 12 through the wireless connection. Generally, the Bluetooth chip may support basic rate (basic rate, BR)/enhanced data rate (enhanced data rate, EDR) Bluetooth and BLE, for example, may receive/send paging (paging) information and receive/send a BLE broadcast message.

In addition, the wireless communication module 203 may further include an antenna. The wireless communication module 203 receives an electromagnetic wave through the antenna, performs frequency modulation and filtering processing on an electromagnetic wave signal, and sends a processed signal to the processor 201. The wireless communication module 203 may further receive a to-be-sent signal from the processor 201, perform frequency modulation and amplification on the signal, and convert the signal into an electromagnetic wave for radiation through the antenna.

The audio module 204 may be configured to manage audio data, to implement input and output of an audio stream by the electronic device. The audio module 204 may include a speaker component 2041 (or referred to as an earpiece or a receiver) configured to output an audio stream, a microphone 2042 (or referred to as a mike or a microphone), and a microphone radio circuit cooperating with the microphone. The speaker 2041 may be configured to convert an audio electrical signal into a sound signal and play the sound signal. The microphone 2042 may be configured to convert a sound signal into an audio electrical signal.

The power module 205 may supply power to each component. For example, the power module 205 includes a battery and a power management chip. The battery may be logically connected to the processor 201 by using the power management chip, to implement functions such as charging management, discharging management, and power consumption management by using the power module 205.

In some embodiments, the electronic device may further include a display (or a display screen), or may not include a display. The display may be configured to display a display interface of an APP, for example, a currently played song. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like. In some embodiments, a touch sensor may be disposed on the display to form a touchscreen. This is not limited in embodiments of this application. The touch sensor is configured to detect a touch operation performed on or near the touch sensor. The touch sensor may transfer the detected touch operation to the processor 201, to determine a type of a touch event. The processor 201 may provide, on the display, a visual output related to the touch operation.

In some embodiments, the electronic device may further include more components such as a USB interface and a sensor. Details are not described in this embodiment of this application. The various components shown in FIG. 2 may be implemented by using hardware including one or more signal processors or application-specific integrated circuits, software, or a combination of hardware and software. It may be understood that the structure shown in this embodiment of this application does not constitute a specific limitation on the electronic device. The electronic device may alternatively include components more or fewer than those shown in the figure, or some components may be combined, or some components may be split, or there may be a different component arrangement.

Optionally, the electronic device 200 may further include a bus. The memory 202 and the wireless communication module 203 may be connected to the processor 201 through the bus. The bus may be a peripheral component interconnect (peripheral component interconnect, PCI) bus or an extended industry standard architecture (extended industry standard architecture, EISA) bus, or the like. The bus may be classified into an address bus, a data bus, a control bus, or the like.

In a possible implementation, in the electronic device 200 shown in FIG. 10, the processor 201 may correspond to the processing unit 702 in the apparatus 700 in FIG. 8, and the wireless communication module 203 may correspond to the transceiver unit 701 in the apparatus 700 in FIG. 8. In addition, the foregoing and other operations and/or functions of the units in the electronic device 700 are separately used for implementing corresponding procedures of the method. For brevity, details are not described herein again. When the electronic device 200 runs, the processor 201 executes computer-executable instructions in the memory 202, to perform the operation steps of the foregoing method by using the electronic device 700.

In a possible implementation, in the electronic device 200 shown in FIG. 10, the processor 201 may correspond to the processing unit 802 in the apparatus 800 in FIG. 9, and the wireless communication module 203 may correspond to the transceiver unit 801 in the apparatus 800 in FIG. 9. In addition, the foregoing and other operations and/or functions of the units in the electronic device 800 are separately used for implementing corresponding procedures of the method. For brevity, details are not described herein again. When the electronic device 200 runs, the processor 201 executes computer-executable instructions in the memory 202, to perform the operation steps of the foregoing method by using the electronic device 800.

It should be noted that the electronic device in this embodiment of this application may be a mobile terminal, or may be a non-mobile terminal. For example, the mobile terminal may be a mobile phone, wireless earphones, a wireless speaker, a wireless band, a tablet computer, a notebook computer, a palmtop computer, a vehicle-mounted terminal, a wearable device, an ultra-mobile personal computer (ultra-mobile personal computer, UMPC), a netbook, a personal digital assistant (personal digital assistant, PDA), or the like. The non-mobile terminal may be a personal computer (personal computer, PC), a television (television, TV), a teller machine, a self-service machine, or the like. This is not specifically limited in embodiments of this application.

Optionally, an embodiment of this application further provides an electronic device, including the processor 201 and the memory 202 shown in FIG. 9, and a computer program that is stored in the memory 202 and that can be run on the processor 201. When the computer program is executed by the processor 201, processes of the foregoing Bluetooth connection method embodiments are implemented, and a same technical effect can be achieved. To avoid repetition, details are not described herein again.

Optionally, in some embodiments, an embodiment of this application further provides a computer-readable medium. The computer-readable medium stores program code. When the computer program code is run on a computer, the computer is enabled to perform the method in each of the foregoing aspects.

Optionally, in some embodiments, an embodiment of this application further provides a computer program product. The computer program product includes computer program code. When the computer program code is run on a computer, the computer is enabled to perform the method in each of the foregoing aspects.

In embodiments of this application, the terminal device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Aspects or features of this application may be implemented as a method, an apparatus, or a product that uses standard programming and/or engineering technologies. The term "product" used in this specification can cover a computer program that can be accessed from any computer-readable component, carrier, or medium. For example, the computer-readable medium may include but is not limited to a magnetic storage device (for example, a hard disk, a floppy disk, or a magnetic tape), an optical disc (for example, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array. FPGA) or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM. For example, the RAM may be used as an external cache. By way of example but not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units or modules is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a computer software product. The computer software product is stored in a storage medium, and includes several instructions for instructing a computer device (which may be a personal computer, a server, a network device, or the like) to perform all or a part of the steps of the methods described in embodiments of this application. The foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

Unless otherwise defined, all technical and scientific terms used in this specification have same meanings as those usually understood by a person skilled in the art of this application. The terms used in the specification of this application are merely for the purpose of describing specific embodiments, and are not intended to limit this application.

## Claims

1. A Bluetooth communication system, wherein the system comprises a first electronic device (12, 01) and a second electronic device (01, 02), wherein
the first electronic device (12, 01) is configured to send (S301) first version information to the second electronic device (01, 02), wherein the first version information is used for indicating a version of the first electronic device;
the second electronic device (01, 02) is configured to: receive (S301) the first version information sent by the first electronic device (12, 01), and send (S303) confirmation information to the first electronic device based on the first version information, wherein the confirmation information is used for indicating that a version of the second electronic device is the same as the version of the first electronic device; and
the first electronic device (12, 01) is further configured to: receive (S303) the confirmation information sent by the second electronic device (01, 02), and establish (S305) a Bluetooth connection to the second electronic device based on a first Bluetooth connection parameter, wherein
the first Bluetooth connection parameter is a Bluetooth connection parameter corresponding to the version of the first electronic device (12, 01);
wherein the second electronic device (01, 02) is further configured to send (S307) first parameter change indication information to the first electronic device (12, 01) if it is determined (S302), based on the version of the first electronic device that is indicated by the first version information, that the version of the first electronic device is different from the version of the second electronic device; and
the first electronic device (12, 01) is further configured to:
receive (S307) the first parameter change indication information sent by the second electronic device (01, 02), wherein the first parameter change indication information is used for indicating whether a stored Bluetooth connection parameter of the second electronic device is changed and indicating change content, wherein the stored Bluetooth connection parameter of the second electronic device is a Bluetooth connection parameter of a previous connection between the first and second electronic devices that is stored by the first electronic device;
if the first parameter change indication information indicates that there is change content, determine (S308) a second Bluetooth connection parameter of the second electronic device (01, 02) based on the stored Bluetooth connection parameter of the second electronic device and the change content indicated by the first parameter change indication information; and
establish (S309) the Bluetooth connection to the second electronic device (01, 02) based on the first Bluetooth connection parameter and the second Bluetooth connection parameter.

2. The system according to claim 1, wherein
the first electronic device (12, 01) is further configured to: if the first parameter change indication information indicates that there is no change content, establish (S310) the Bluetooth connection to the second electronic device (01, 02) based on the first Bluetooth connection parameter and the stored Bluetooth connection parameter of the second electronic device.

3. The system according to claim 1 or 2, wherein
the second electronic device (01, 02) is further configured to flag the change content of the Bluetooth connection parameter of the second electronic device by flagging a mask, to obtain the first parameter change indication information.

4. The system according to any one of claims 1 to 2, wherein
the first electronic device (12, 01) is further configured to: when the version of the second electronic device (01, 02) is different from the version of the first electronic device, send a second request message to the second electronic device, wherein the second request message comprises the first Bluetooth connection parameter of the first electronic device;
the second electronic device (01, 02) is further configured to: receive the second request message sent by the first electronic device (12, 01), and send (S311) a second response message to the first electronic device based on the second request message, wherein the second response message comprises the second Bluetooth connection parameter of the second electronic device; and
the first electronic device (12, 01) is further configured to: receive (S311) the second response message sent by the second electronic device (01, 02), and establish the Bluetooth connection to the second electronic device based on the first Bluetooth connection parameter and the second Bluetooth connection parameter.

5. The system according to any one of claims 1 to 4, wherein
the first electronic device (12, 01) is specifically configured to send (S301) a first request message to the second electronic device (01, 02), wherein the first request message comprises the first version information;
the second electronic device (01, 02) is specifically configured to: receive (S307) the first request message sent by the first electronic device (12, 01), and send (S303) a first response message to the first electronic device based on the first request message, wherein the first response message comprises the confirmation information; and
the first electronic device (12, 01) is further specifically configured to receive (S303) the first response message sent by the second electronic device (01, 02).

6. A Bluetooth connection method, wherein the method comprises:
sending (S301), by a first electronic device (12, 01), first version information to a second electronic device (01, 02), wherein the first version information is used for indicating a version of the first electronic device;
receiving (S303), by the first electronic device (12, 01), confirmation information sent by the second electronic device (01, 02), wherein the confirmation information is used for indicating that a version of the second electronic device is the same as the version of the first electronic device; and
establishing (S305), by the first electronic device (12, 01), a Bluetooth connection to the second electronic device (01, 02) based on a first Bluetooth connection parameter, wherein
the first Bluetooth connection parameter is a Bluetooth connection parameter corresponding to the version of the first electronic device;.
wherein the method further comprises:
when the version of the second electronic device (01, 02) is different from the version of the first electronic device (12, 01), receiving (S307) first parameter change indication information sent by the second electronic device, wherein the first parameter change indication information is used for indicating change content of a stored Bluetooth connection parameter of the second electronic device (01, 02), wherein the stored Bluetooth connection parameter of the second electronic device is a Bluetooth connection parameter of a previous connection between the first and second electronic devices that is stored by the first electronic device;
determining (S308) a second Bluetooth connection parameter of the second electronic device (01, 02) based on the stored Bluetooth connection parameter of the second electronic device and the change content indicated by the first parameter change indication information; and
establishing (S309) the Bluetooth connection to the second electronic device (01, 02) based on the first Bluetooth connection parameter and the second Bluetooth connection parameter.

7. The method according to claim 6, wherein the method further comprises:
if the first parameter change indication information indicates that the first Bluetooth connection parameter has no change content, establishing (S310) the Bluetooth connection to the second electronic device (01, 02) based on the first Bluetooth connection parameter and the stored Bluetooth connection parameter of the second electronic device.

8. The method according to claim 6 or 7, wherein the first parameter change indication information is information obtained by flagging a mask.

9. The method according to any one of claims 6 to 7, wherein the method further comprises:
when the version of the second electronic device (01, 02) is different from the version of the first electronic device (12, 01), sending, by the first electronic device, a second request message to the second electronic device, wherein the second request message comprises the first Bluetooth connection parameter of the first electronic device;
receiving (S311), by the first electronic device (12, 01), a second response message sent by the second electronic device (01, 02), wherein the second response message comprises the second Bluetooth connection parameter of the second electronic device; and
establishing, by the first electronic device (12, 01), the Bluetooth connection to the second electronic device (01, 02) based on the first Bluetooth connection parameter and the second Bluetooth connection parameter.

10. The method according to any one of claims 6 to 9, wherein the sending (S301), by a first electronic device (12, 01), first version information to a second electronic device (01, 02) comprises:
sending, by the first electronic device (12, 01), a first request message to the second electronic device (01, 02), wherein the first request message comprises the first version information; and
the receiving (S303), by the first electronic device (12, 01), confirmation information sent by the second electronic device (01, 02) comprises:
receiving, by the first electronic device (12, 01), a first response message sent by the second electronic device (01, 02) for the first request message, wherein the first response message comprises the confirmation information.

11. An electronic device (200), comprising a processor (201), wherein the processor is coupled to a memory (202), and the processor is configured to execute a computer program or instructions stored in the memory, so that the electronic device implements the method according to any one of claims 6 to 10.

12. A computer-readable storage medium, wherein the computer-readable storage medium stores a computer program, and when the computer program is run on an electronic device, the electronic device is enabled to perform the method according to any one of claims 6 to 10.

## Patentansprüche

1. Bluetooth-Kommunikationssystem, wobei das System eine erste elektronische Vorrichtung (12, 01) und eine zweite elektronische Vorrichtung (01, 02) umfasst, wobei
die erste elektronische Vorrichtung (12, 01) konfiguriert ist, um erste Versionsinformationen an die zweite elektronische Vorrichtung (01, 02) zu senden (S301), wobei die ersten Versionsinformationen zum Angeben einer Version der ersten elektronischen Vorrichtung verwendet werden;
die zweite elektronische Vorrichtung (01, 02) konfiguriert ist, um: die von der ersten elektronischen Vorrichtung (12, 01) gesendeten ersten Versionsinformationen zu empfangen (S301) und Bestätigungsinformationen an die erste elektronische Vorrichtung basierend auf den ersten Versionsinformationen zu senden (S303), wobei die Bestätigungsinformationen verwendet werden, um anzugeben, dass eine Version der zweiten elektronischen Vorrichtung mit der Version der ersten elektronischen Vorrichtung übereinstimmt; und
die erste elektronische Vorrichtung (12, 01) ferner konfiguriert ist, um: die von der zweiten elektronischen Vorrichtung (01, 02) gesendeten Bestätigungsinformationen zu empfangen (S303) und eine Bluetooth-Verbindung zu der zweiten elektronischen Vorrichtung basierend auf einem ersten Bluetooth-Verbindungsparameter herzustellen (S305), wobei der erste Bluetooth-Verbindungsparameter ein Bluetooth-Verbindungsparameter ist, der der Version der ersten elektronischen Vorrichtung (12, 01) entspricht;
wobei die zweite elektronische Vorrichtung (01, 02) ferner konfiguriert ist, um erste Parameteränderungsangabeinformationen an die erste elektronische Vorrichtung (12, 01) zu senden (S307), wenn basierend auf der Version der ersten elektronischen Vorrichtung, die durch die ersten Versionsinformationen angegeben ist, bestimmt wird (S302), dass die Version der ersten elektronischen Vorrichtung sich von der Version der zweiten elektronischen Vorrichtung unterscheidet; und
die erste elektronische Vorrichtung (12, 01) ferner konfiguriert ist, um:
die von der zweiten elektronischen Vorrichtung (01, 02) gesendete erste Parameteränderungsangabeinformationen zu empfangen (S307), wobei die ersten Parameteränderungsangabeinformationen verwendet werden, um anzugeben, ob ein gespeicherter Bluetooth-Verbindungsparameter der zweiten elektronischen Vorrichtung geändert wurde und, um den Änderungsinhalts anzugeben, wobei der gespeicherte Bluetooth-Verbindungsparameter der zweiten elektronischen Vorrichtung ein Bluetooth-Verbindungsparameter einer vorherigen Verbindung zwischen der ersten und der zweiten elektronischen Vorrichtung ist, der von der ersten elektronischen Vorrichtung gespeichert wurde;
einen zweiten Bluetooth-Verbindungsparameters der zweiten elektronischen Vorrichtung (01, 02) basierend auf dem gespeicherten Bluetooth-Verbindungsparameter der zweiten elektronischen Vorrichtung und dem durch die ersten Parameteränderungsangabeinformationen angegebenen Änderungsinhalt zu bestimmen (S308), wenn die ersten Parameteränderungsangabeinformationen angeben, dass Änderungsinhalt vorliegt; und
die Bluetooth-Verbindung mit der zweiten elektronischen Vorrichtung (01, 02) basierend auf dem ersten Bluetooth-Verbindungsparameter und dem zweiten Bluetooth-Verbindungsparameter herzustellen (S309).

2. System nach Anspruch 1, wobei
die erste elektronische Vorrichtung (12, 01) ferner konfiguriert ist, um: die Bluetooth-Verbindung mit der zweiten elektronischen Vorrichtung (01, 02) basierend auf dem ersten Bluetooth-Verbindungsparameter und dem gespeicherten Bluetooth-Verbindungsparameter der zweiten elektronischen Vorrichtung herzustellen (S310), wenn die ersten Parameteränderungsangabeinformationen angeben, dass kein geänderter Inhalt vorliegt.

3. System nach Anspruch 1 oder 2, wobei
die zweite elektronische Vorrichtung (01, 02) ferner konfiguriert ist, um den Änderungsinhalt des Bluetooth-Verbindungsparameters der zweiten elektronischen Vorrichtung durch Markieren einer Maske zu markieren, um die ersten Parameteränderungsangabeinformationen zu erlangen.

4. System nach einem der Ansprüche 1 bis 2, wobei
die erste elektronische Vorrichtung (12, 01) ferner konfiguriert ist, um: eine zweite Anforderungsnachricht an die zweite elektronische Vorrichtung zu senden, wenn die Version der zweiten elektronischen Vorrichtung (01, 02) sich von der Version der ersten elektronischen Vorrichtung unterscheidet, wobei die zweite Anforderungsnachricht den ersten Bluetooth-Verbindungsparameter der ersten elektronischen Vorrichtung umfasst;
die zweite elektronische Vorrichtung (01, 02) ferner konfiguriert ist, um: die von der ersten elektronischen Vorrichtung (12, 01) gesendete zweite Anforderungsnachricht zu empfangen und eine zweite Antwortnachricht an die erste elektronische Vorrichtung basierend auf der zweiten Anforderungsnachricht zu senden (S311), wobei die zweite Antwortnachricht den zweiten Bluetooth-Verbindungsparameter der zweiten elektronischen Vorrichtung umfasst; und
die erste elektronische Vorrichtung (12, 01) ferner konfiguriert ist, um: die von der zweiten elektronischen Vorrichtung (01, 02) gesendeten zweite Antwortnachricht zu empfangen (S311) und die Bluetooth-Verbindung zu der zweiten elektronischen Vorrichtung basierend auf dem ersten Bluetooth-Verbindungsparameter und dem zweiten Bluetooth-Verbindungsparameter herzustellen.

5. System nach einem der Ansprüche 1 bis 4, wobei
die erste elektronische Vorrichtung (12, 01) speziell konfiguriert ist, um eine erste Anforderungsnachricht an die zweite elektronische Vorrichtung (01, 02) zu senden (S301), wobei die erste Anforderungsnachricht die ersten Versionsinformationen umfasst;
die zweite elektronische Vorrichtung (01, 02) speziell konfiguriert ist, um: die von der ersten elektronischen Vorrichtung (12, 01) gesendete erste Anforderungsnachricht zu empfangen (S307) und eine erste Antwortnachricht an die erste elektronische Vorrichtung basierend auf der ersten Anforderungsnachricht zu senden (S303), wobei die erste Antwortnachricht die Bestätigungsinformationen umfasst; und
die erste elektronische Vorrichtung (12, 01) ferner speziell konfiguriert ist, um die von der zweiten elektronischen Vorrichtung (01, 02) gesendete erste Antwortnachricht zu empfangen (S303).

6. Bluetooth-Kommunikationsverfahren, wobei das Verfahren Folgendes umfasst:
Senden (S301) von ersten Versionsinformationen an eine zweite elektronische Vorrichtung (01, 02) durch eine erste elektronische Vorrichtung (12, 01), wobei die ersten Versionsinformationen zum Angeben einer Version der ersten elektronischen Vorrichtung verwendet werden;
Empfangen (S303) von Bestätigungsinformationen, die von der zweiten elektronischen Vorrichtung (01, 02) gesendet wurden, durch die erste elektronische Vorrichtung (12, 01), wobei die Bestätigungsinformationen verwendet werden, um anzugeben, dass eine Version der zweiten elektronischen Vorrichtung mit der Version der ersten elektronischen Vorrichtung übereinstimmt; und Herstellen (S305) einer Bluetooth-Verbindung mit der zweiten elektronischen Vorrichtung (01, 02) durch die erste elektronische Vorrichtung (12, 01) basierend auf einem ersten Bluetooth-Verbindungsparameter, wobei
der erste Bluetooth-Verbindungsparameter ein Bluetooth-Verbindungsparameter ist, der der Version der ersten elektronischen Vorrichtung entspricht;.
wobei das Verfahren ferner Folgendes umfasst:
Empfangen (S307) von ersten Parameteränderungsangabeinformationen, die von der zweiten elektronischen Vorrichtung gesendet wurden, wenn die Version der zweiten elektronischen Vorrichtung (01, 02) sich von der Version der ersten elektronischen Vorrichtung (12, 01) unterscheidet, wobei die ersten Parameteränderungsangabeinformationen zum Angeben von Änderungsinhalt eines gespeicherten Bluetooth-Verbindungsparameters der zweiten elektronischen Vorrichtung (01, 02) verwendet werden, wobei der gespeicherte Bluetooth-Verbindungsparameter der zweiten elektronischen Vorrichtung ein Bluetooth-Verbindungsparameter einer vorherigen Verbindung zwischen der ersten und der zweiten elektronischen Vorrichtung ist, die von der ersten elektronischen Vorrichtung gespeichert wurde;
Bestimmen (S308) eines zweiten Bluetooth-Verbindungsparameters der zweiten elektronischen Vorrichtung (01, 02) basierend auf dem gespeicherten Bluetooth-Verbindungsparameter der zweiten elektronischen Vorrichtung und dem durch die ersten Parameteränderungsangabeinformationen angegebenen Änderungsinhalt; und
Herstellen (S309) der Bluetooth-Verbindung mit der zweiten elektronischen Vorrichtung (01, 02) basierend auf dem ersten Bluetooth-Verbindungsparameter und dem zweiten Bluetooth-Verbindungsparameter.

7. Verfahren nach Anspruch 6, wobei das Verfahren ferner Folgendes umfasst:
Herstellen (S310) der Bluetooth-Verbindung mit der zweiten elektronischen Vorrichtung (01, 02) basierend auf dem ersten Bluetooth-Verbindungsparameter und dem gespeicherten Bluetooth-Verbindungsparameter der zweiten elektronischen Vorrichtung, wenn die ersten Parameteränderungsangabeinformationen angeben, dass kein geänderter Inhalt vorliegt.

8. Verfahren nach Anspruch 6 oder 7, wobei die ersten Parameteränderungsangabeinformationen Information sind, die durch Markieren einer Maske erlangt werden.

9. Verfahren nach einem der Ansprüche 6 bis 7, wobei das Verfahren ferner Folgendes umfasst:
Senden einer zweiten Anforderungsnachricht an die zweite elektronische Vorrichtung durch die erste elektronische Vorrichtung, wenn die Version der zweiten elektronischen Vorrichtung (01, 02) sich von der Version der ersten elektronischen Vorrichtung (12, 01) unterscheidet, wobei die zweite Anforderungsnachricht den ersten Bluetooth-Verbindungsparameter der ersten elektronischen Vorrichtung umfasst;
Empfangen (S311) einer zweiten Antwortnachricht, die von der zweiten elektronischen Vorrichtung (01, 02) gesendet wurde, durch die erste elektronische Vorrichtung (12, 01), wobei die zweite Antwortnachricht den zweiten Bluetooth-Verbindungsparameter der zweiten elektronischen Vorrichtung umfasst; und
Herstellen der Bluetooth-Verbindung mit der zweiten elektronischen Vorrichtung (01, 02) durch die erste elektronische Vorrichtung (12, 01) basierend auf dem ersten Bluetooth-Verbindungsparameter und dem zweiten Bluetooth-Verbindungsparameter.

10. Verfahren nach einem der Ansprüche 6 bis 9, wobei das Senden (S301) von ersten Versionsinformationen durch eine erste elektronische Vorrichtung (12, 01) an eine zweite elektronische Vorrichtung (01, 02) umfasst:
Senden, durch die erste elektronische Vorrichtung (12, 01), einer ersten Anforderungsnachricht an die zweite elektronische Vorrichtung (01, 02), wobei die erste Anforderungsnachricht die ersten Versionsinformationen umfasst; und
Empfangen (S303) von Bestätigungsinformationen, die von der zweiten elektronischen Vorrichtung (01, 02) gesendet wurden, durch die erste elektronische Vorrichtung (12, 01), wobei das Empfangen umfasst:
Empfangen einer ersten Antwortnachricht, die von der zweiten elektronischen Vorrichtung (01, 02) auf die erste Anforderungsnachricht gesendet wurde, durch die erste elektronische Vorrichtung (12, 01), wobei die erste Antwortnachricht die Bestätigungsinformationen umfasst.

11. Elektronische Vorrichtung (200), umfassend einen Prozessor (201), wobei der Prozessor mit einem Speicher (202) gekoppelt ist und der Prozessor konfiguriert ist, um ein Computerprogramm oder Anweisungen auszuführen, die in dem Speicher gespeichert sind, sodass die elektronische Vorrichtung das Verfahren nach einem der Ansprüche 6 bis 10 implementiert.

12. Computerlesbares Speichermedium, wobei das computerlesbare Speichermedium ein Computerprogramm speichert und, wenn das Computerprogramm auf einer elektronischen Vorrichtung läuft, die elektronische Vorrichtung in die Lage versetzt wird, das Verfahren gemäß einem der Ansprüche 6 bis 10 durchzuführen.

## Revendications

1. Système de communication Bluetooth, dans lequel le système comprend un premier dispositif électronique (12, 01) et un second dispositif électronique (01, 02), dans lequel
le premier dispositif électronique (12, 01) est configuré pour envoyer (S301) des premières informations de version au second dispositif électronique (01, 02), dans lequel les premières informations de version sont utilisées pour indiquer une version du premier dispositif électronique ;
le second dispositif électronique (01, 02) est configuré pour :
recevoir (S301) les premières informations de version envoyées par le premier dispositif électronique (12, 01), et envoyer (S303) des informations de confirmation au premier dispositif électronique sur la base des premières informations de version, dans lequel les informations de confirmation sont utilisées pour indiquer qu'une version du second dispositif électronique est la même que la version du premier dispositif électronique ; et
le premier dispositif électronique (12, 01) est également configuré pour : recevoir (S303) les informations de confirmation envoyées par le second dispositif électronique (01, 02), et établir (S305) une connexion Bluetooth avec le second dispositif électronique sur la base d'un premier paramètre de connexion Bluetooth, dans lequel
le premier paramètre de connexion Bluetooth est un paramètre de connexion Bluetooth correspondant à la version du premier dispositif électronique (12, 01) ;
dans lequel le second dispositif électronique (01, 02) est également configuré pour envoyer (S307) des premières informations d'indication de changement de paramètre au premier dispositif électronique (12, 01) s'il est déterminé (S302), sur la base de la version du premier dispositif électronique qui est indiquée par les premières informations de version, que la version du premier dispositif électronique est différente de la version du second dispositif électronique ; et
le premier dispositif électronique (12, 01) est également configuré pour :
recevoir (S307) les premières informations d'indication de changement de paramètre envoyées par le second dispositif électronique (01, 02), dans lequel les premières informations d'indication de changement de paramètre sont utilisées pour indiquer si un paramètre de connexion Bluetooth stocké du second dispositif électronique est modifié et indiquer un contenu de changement, dans lequel le paramètre de connexion Bluetooth stocké du second dispositif électronique est un paramètre de connexion Bluetooth d'une connexion précédente entre les premier et second dispositifs électroniques qui est stocké par le premier dispositif électronique ;
si les premières informations d'indication de changement de paramètre indiquent qu'il y a un contenu de changement, déterminer (S308) un second paramètre de connexion Bluetooth du second dispositif électronique (01, 02) sur la base du paramètre de connexion Bluetooth stocké du second dispositif électronique et du contenu de changement indiqué par les premières informations d'indication de changement de paramètre ; et
établir (S309) la connexion Bluetooth avec le second dispositif électronique (01, 02) sur la base du premier paramètre de connexion Bluetooth et du second paramètre de connexion Bluetooth.

2. Système selon la revendication 1, dans lequel
le premier dispositif électronique (12, 01) est également configuré pour : si les premières informations d'indication de changement de paramètre indiquent qu'il n'y a pas de contenu de changement, établir (S310) la connexion Bluetooth avec le second dispositif électronique (01, 02) sur la base du premier paramètre de connexion Bluetooth et du paramètre de connexion Bluetooth stocké du second dispositif électronique.

3. Système selon la revendication 1 ou 2, dans lequel
le second dispositif électronique (01, 02) est également configuré pour marquer le contenu de changement du paramètre de connexion Bluetooth du second dispositif électronique en marquant un masque, pour obtenir les premières informations d'indication de changement de paramètre.

4. Système selon l'une quelconque des revendications 1 et 2, dans lequel
le premier dispositif électronique (12, 01) est également configuré pour : lorsque la version du second dispositif électronique (01, 02) est différente de la version du premier dispositif électronique, envoyer un second message de demande au second dispositif électronique, dans lequel le second message de demande comprend le premier paramètre de connexion Bluetooth du premier dispositif électronique ;
le second dispositif électronique (01, 02) est également configuré pour : recevoir le second message de demande envoyé par le premier dispositif électronique (12, 01), et envoyer (S311) un second message de réponse au premier dispositif électronique sur la base du second message de demande, dans lequel le second message de réponse comprend le second paramètre de connexion Bluetooth du second dispositif électronique ; et
le premier dispositif électronique (12, 01) est également configuré pour : recevoir (S311) le second message de réponse envoyé par le second dispositif électronique (01, 02), et établir la connexion Bluetooth avec le second dispositif électronique sur la base du premier paramètre de connexion Bluetooth et du second paramètre de connexion Bluetooth.

5. Système selon l'une quelconque des revendications 1 à 4, dans lequel
le premier dispositif électronique (12, 01) est spécifiquement configuré pour envoyer (S301) un premier message de demande au second dispositif électronique (01, 02), dans lequel le premier message de demande comprend les premières informations de version ;
le second dispositif électronique (01, 02) est spécifiquement configuré pour : recevoir (S307) le premier message de demande envoyé par le premier dispositif électronique (12, 01), et envoyer (S303) un premier message de réponse au premier dispositif électronique sur la base du premier message de demande, dans lequel le premier message de réponse comprend les informations de confirmation ; et
le premier dispositif électronique (12, 01) est également spécifiquement configuré pour recevoir (S303) le premier message de réponse envoyé par le second dispositif électronique (01, 02).

6. Procédé de connexion Bluetooth, dans lequel le procédé comprend :
l'envoi (S301), par un premier dispositif électronique (12, 01), de premières informations de version à un second dispositif électronique (01, 02), dans lequel les premières informations de version sont utilisées pour indiquer une version du premier dispositif électronique ;
la réception (S303), par le premier dispositif électronique (12, 01), d'informations de confirmation envoyées par le second dispositif électronique (01, 02), dans lequel les informations de confirmation sont utilisées pour indiquer qu'une version du second dispositif électronique est la même que la version du premier dispositif électronique ; et
l'établissement (S305), par le premier dispositif électronique (12, 01), d'une connexion Bluetooth avec le second dispositif électronique (01, 02) sur la base d'un premier paramètre de connexion Bluetooth, dans lequel
le premier paramètre de connexion Bluetooth est un paramètre de connexion Bluetooth correspondant à la version du premier dispositif électronique ;
dans lequel le procédé comprend également :
lorsque la version du second dispositif électronique (01, 02) est différente de la version du premier dispositif électronique (12, 01), la réception (S307) de premières informations d'indication de changement de paramètre envoyées par le second dispositif électronique, dans lequel les premières informations d'indication de changement de paramètre sont utilisées pour indiquer un contenu de changement d'un paramètre de connexion Bluetooth stocké du second dispositif électronique (01, 02), dans lequel le paramètre de connexion Bluetooth stocké du second dispositif électronique est un paramètre de connexion Bluetooth d'une connexion précédente entre les premier et second dispositifs électroniques qui est stocké par le premier dispositif électronique ;
la détermination (S308) d'un second paramètre de connexion Bluetooth du second dispositif électronique (01, 02) sur la base du paramètre de connexion Bluetooth stocké du second dispositif électronique et du contenu de changement indiqué par les premières informations d'indication de changement de paramètre ; et
l'établissement (S309) de la connexion Bluetooth avec le second dispositif électronique (01, 02) sur la base du premier paramètre de connexion Bluetooth et du second paramètre de connexion Bluetooth.

7. Procédé selon la revendication 6, dans lequel le procédé comprend également :
si les premières informations d'indication de changement de paramètre indiquent que le premier paramètre de connexion Bluetooth n'a pas de contenu de changement, l'établissement (S310) de la connexion Bluetooth avec le second dispositif électronique (01, 02) sur la base du premier paramètre de connexion Bluetooth et du paramètre de connexion Bluetooth stocké du second dispositif électronique.

8. Procédé selon la revendication 6 ou 7, dans lequel les premières informations d'indication de changement de paramètre sont des informations obtenues en marquant un masque.

9. Procédé selon l'une quelconque de la revendication 6 et 7, dans lequel le procédé comprend également :
lorsque la version du second dispositif électronique (01, 02) est différente de la version du premier dispositif électronique (12, 01), l'envoi, par le premier dispositif électronique, d'un second message de demande au second dispositif électronique, dans lequel le second message de demande comprend le premier paramètre de connexion Bluetooth du premier dispositif électronique ;
la réception (S311), par le premier dispositif électronique (12, 01), d'un second message de réponse envoyé par le second dispositif électronique (01, 02), dans lequel le second message de réponse comprend le second paramètre de connexion Bluetooth du second dispositif électronique ; et
l'établissement, par le premier dispositif électronique (12, 01), de la connexion Bluetooth avec le second dispositif électronique (01, 02) sur la base du premier paramètre de connexion Bluetooth et du second paramètre de connexion Bluetooth.

10. Procédé selon l'une quelconque des revendications 6 à 9, dans lequel l'envoi (S301), par un premier dispositif électronique (12, 01), de premières informations de version à un second dispositif électronique (01, 02) comprend :
l'envoi, par le premier dispositif électronique (12, 01), d'un premier message de demande au second dispositif électronique (01, 02), dans lequel le premier message de demande comprend les premières informations de version ; et
la réception (S303), par le premier dispositif électronique (12, 01), d'informations de confirmation envoyées par le second dispositif électronique (01, 02) comprend :
la réception, par le premier dispositif électronique (12, 01), d'un premier message de réponse envoyé par le second dispositif électronique (01, 02) pour le premier message de demande, dans lequel le premier message de réponse comprend les informations de confirmation.

11. Dispositif électronique (200), comprenant un processeur (201), dans lequel le processeur est couplé à une mémoire (202), et le processeur est configuré pour exécuter un programme informatique ou des instructions stockées dans la mémoire, de sorte que le dispositif électronique met en œuvre le procédé selon l'une quelconque des revendications 6 à 10.

12. Support de stockage lisible par ordinateur, dans lequel le support de stockage lisible par ordinateur stocke un programme informatique, et lorsque le programme informatique s'exécute sur un dispositif électronique, le dispositif électronique est activé pour réaliser le procédé selon l'une quelconque des revendications 6 à 10.
